(19) Europäisches Patentamt
European Patent Office
Office européen des brevets

(11) **EP 4 769 050 A1**

(12) **EUROPEAN PATENT APPLICATION**

(43) Date of publication:
01.07.2026 Bulletin 2026/27

(21) Application number: 25226642.4

(22) Date of filing: 23.12.2025

(51) International Patent Classification (IPC):
**G05D 1/242** (2024.01)    **A01B 69/00** (2006.01)
**B62D 15/02** (2006.01)    **G01S 17/931** (2020.01)

(52) Cooperative Patent Classification (CPC):
**G01S 17/931; A01B 69/001; A01B 69/008;**
**B62D 15/023; G01S 17/86; G05D 1/242;**
B62D 13/00; G05D 2107/21; G05D 2109/16;
G05D 2111/17

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 26.12.2024  JP 2024231291

(71) Applicant: Kubota Corporation
Osaka-shi, Osaka 530-0011 (JP)

(72) Inventors:
• SUYAMA, Tomoya
Sakai-shi, Osaka, 590-0908 (JP)
• OKUYAMA, Yuji
Sakai-shi, Osaka, 590-0908 (JP)

(74) Representative: Müller-Boré & Partner
Patentanwälte PartG mbB
Friedenheimer Brücke 21
80639 München (DE)

(54) **TRAVEL CONTROL SYSTEMS, WORK VEHICLES, TRAVEL CONTROL METHODS, AND COMPUTER PROGRAMS**

(57)     A travel control system is a system that controls travel of a work vehicle having an implement linked thereto, and includes one or more LiDAR sensors attached to the work vehicle to output point cloud data representing a surrounding environment of the work vehicle including at least a portion of the implement, and a controller configured or programmed to control travel of the work vehicle. The implement is linked to the work vehicle in a manner that permits turning relative to the work vehicle. The controller is configured or programmed to determine a position of a characteristic point of the implement based on the point cloud data acquired from the LiDAR sensor, and calculate an angle between an orientation of the work vehicle and an orientation of the implement based on the position of the characteristic point.

*FIG. 1B*

**Description**

CROSS REFERENCE TO RELATED APPLICATIONS

This application claims the benefit of priority to Japanese Patent Application No. 2024-231291 filed on December 26, 2024. The entire contents of this application are hereby incorporated herein by reference.

BACKGROUND OF THE INVENTION

1. Field of the Invention

The present invention relates to travel control systems, work vehicles, travel control methods, and non-transitory computer-readable media including computer programs.

2. Description of the Related Art

As attempts in next-generation agriculture, research and development of smart agriculture utilizing ICT (Information and Communication Technology) and IoT (Internet of Things) is under way. Research and development is also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.
International Publication No. 2022/107586 describes a work vehicle that is capable of autonomous movement among a plurality of rows of trees in an orchard, such as a vineyard, by using an SLAM (Simultaneous Localization and Mapping) technique that simultaneously performs localization and map generation. International Publication No. 2022/107586 describes, in an orchard, a work vehicle traveling among a plurality of rows of trees, where the work vehicle performs mowing, preventive pest control, or other work by using an implement (agricultural implement) that is linked to the work vehicle.

SUMMARY OF THE INVENTION

There are cases where an implement is linked to a work vehicle in a manner that permits turning relative to the work vehicle. In such cases, too, there is a desire to control the travel of the work vehicle having the implement linked thereto.
Example embodiments of the present invention provide travel control systems, work vehicles, travel control methods, and non-transitory computer-readable media including computer programs which are capable of controlling travel of a work vehicle having an implement linked thereto even when the implement is linked to the work vehicle in a manner that permits turning relative to the work vehicle.
According to example embodiments of the present invention, solutions as described in the following Items are provided.

[Item 1]

A travel control system that controls travel of a work vehicle having an implement linked thereto, the travel control system including one or more LiDAR sensors attached to the work vehicle to output point cloud data representing a surrounding environment of the work vehicle including at least a portion of the implement, and a controller configured or programmed to control travel of the work vehicle, wherein the implement is linked to the work vehicle in a manner that permits turning relative to the work vehicle, and the controller is configured or programmed to determine a position of a characteristic point of the implement based on the point cloud data acquired from the LiDAR sensor, and calculate an angle between an orientation of the work vehicle and an orientation of the implement based on the position of the characteristic point.

[Item 2]

The travel control system of Item 1, wherein the controller is configured or programmed to calculate the angle between the orientation of the work vehicle and the orientation of the implement based on a position relationship between the position of the characteristic point and a position of a center of turning of the implement with respect to the work vehicle.

[Item 3]

The travel control system of Item 1 or 2, wherein the controller is configured or programmed to extract point cloud data representing reflection points on a surface of the implement by filtering the point cloud data acquired by the LiDAR sensor, and calculate the position of the characteristic point based on the extracted point cloud data.

[Item 4]

The travel control system of Item 3, wherein the controller is configured or programmed to calculate the position of the characteristic point by determining an arithmetic mean or a weighted mean of the extracted point cloud data.

[Item 5]

The travel control system of Item 3, wherein the controller is configured or programmed to determine the position of the characteristic point by detecting a characteristic shape of the implement or a member that is attached to the implement based on the extracted point cloud data.

[Item 6]

The travel control system of any of Items 3 to 5, wherein the controller is configured or programmed to perform the filtering of the point cloud data by downsampling the point cloud data acquired by the LiDAR sensor.

[Item 7]

The travel control system of any of Items 3 to 6, wherein the controller is configured or programmed to consecutively calculate the angle while the work vehicle is traveling, and perform the filtering of the point cloud data by extracting any instance of the point cloud data that falls in a predetermined angle range from a previously-calculated value of the angle.

[Item 8]

The travel control system of any of Items 3 to 7, wherein the controller is configured or programmed to consecutively calculate the angle while the work vehicle is traveling, and perform the filtering of the point cloud data by extracting any instance of the point cloud data that falls in a predetermined distance range from a previously-calculated position of the characteristic point.

[Item 9]

The travel control system of any of Items 1 to 8, wherein the controller is configured or programmed to acquire a trajectory of the characteristic point while the work vehicle is traveling in a curve, calculate a position of a center of rotation of the characteristic point based on the trajectory of the characteristic point, and calculate the angle based on the position of the center of rotation of the characteristic point.

[Item 10]

The travel control system of any of Items 1 to 9, wherein the controller is configured or programmed to, based on information of a distance and a direction of a reflection point from the LiDAR sensor as indicated by the point cloud data acquired by the LiDAR sensor, acquire information of a position of each reflection point.

[Item 11]

The travel control system of any of Items 1 to 10, wherein the point cloud data is two-dimensional point cloud data including two-dimensional position information.

[Item 12]

The travel control system of any of Items 1 to 11, wherein the controller is configured or programmed to generate a travel path of the work vehicle based on the calculated angle.

[Item 13]

The travel control system of any of Items 1 to 12, wherein a marker that is located in a range of sensing by the LiDAR sensor is attached to the implement.

[Item 14]

The travel control system of any of Items 1 to 13, wherein the controller is configured or programmed to cause the calculated angle to be displayed by a display device of the work vehicle.

[Item 15]

A work vehicle including the travel control system of any of Items 1 to 14, a travel device including a wheel responsible for steering, and a driver to drive the travel device, wherein the controller is configured or programmed to perform steering control for the wheel responsible for steering by controlling the driver based on the calculated angle.

[Item 16]

The work vehicle of Item 15, wherein the work vehicle includes a linking portion by which the implement is connected so as to be capable of turning around the linking portion, and a relative position of the linking portion with respect to a vehicle body of the work vehicle is switchable between when work is being performed by using the implement and when work is not being performed by using the implement.

[Item 17]

A method, to be executed by one or more computers, of controlling travel of a work vehicle having an implement linked thereto in a manner that permits turning relative to the work vehicle, includes determining a position of a characteristic point of the implement based on point cloud data acquired from one or more LiDAR sensors attached to the work vehicle to output point cloud data representing a surrounding environment of the work vehicle including at least a portion of the implement, and calculating an angle between an orientation of the work vehicle and an orientation of the implement based on a position of the characteristic point.

[Item 18]

A non-transitory computer-readable medium including a computer program to be executed by a processor in a controller that controls travel of a work vehicle having an implement linked thereto in a manner that permits turning relative to the work vehicle, the computer program being executable to cause the processor to perform determining a position of a characteristic point of the implement based on point cloud data acquired from one or more LiDAR sensors attached to the work vehicle to output point cloud data representing a surrounding environment of the work vehicle including at least a portion of the implement, and calculating an angle between an orientation of the work vehicle and an orientation of the implement based on a position of the characteristic point.

[Item 19]

A controller to perform the method of Item 17.

[Item 20]

A non-transitory computer-readable medium including a computer program to be executed by a computer that controls travel of a work vehicle having an implement linked thereto, wherein the computer program causes the computer to perform the method of Item 17.

[Item 21]

A non-transitory computer-readable medium including a computer program to be executed by a computer that controls travel of a work vehicle having an implement linked thereto, wherein the computer program is executable to cause the computer to perform steps of the method of travel control of Item 17.

[Item 22]

A path generation system to control travel of a work vehicle having an implement linked thereto, the path generation system including one or more LiDAR sensors attached to the work vehicle to output point cloud data representing a surrounding environment of the work vehicle including at least a portion of the implement, and the controller of Item 19.

[Item 23]

A controller configured or programmed to control travel of a work vehicle having an implement linked thereto in a manner that permits turning relative to the work vehicle, the controller is configured or programmed to determine a position of a characteristic point of the implement based on point cloud data acquired from one or more LiDAR sensors attached to the work vehicle to output point cloud data representing a surrounding environment of the work vehicle including at least a portion of the implement, and to calculate an angle between an orientation of the work vehicle and an orientation of the implement based on the position of the characteristic point.

[Item 24]

The controller of Item 23, wherein the controller is configured or programmed to control travel of the work vehicle based on the calculated angle.

[Item 25]

A travel control system to control travel of a work vehicle having an implement linked thereto, the travel control system including the controller of Item 24, and a driver to drive a travel device including a wheel responsible for steering, wherein the controller is configured or programmed to perform steering control for the wheel responsible for steering by controlling the driver based on the calculated angle.

Example embodiments of the present invention may be implemented using devices, systems, methods, integrated circuits, computer programs, non-transitory computer-readable storage media, or any combination thereof. The computer-readable storage media may be inclusive of volatile storage media, or non-volatile storage media. The device may include a plurality of devices. In the case where the device includes two or more devices, the two or more devices may be provided within a single apparatus, or divided over two or more separate apparatuses.

According to example embodiments of the present invention, there are provided travel control systems, work vehicles, travel control methods, and non-transitory computer-readable media including computer programs each of which are capable of controlling travel of a work vehicle having an implement linked thereto even when the implement is linked to the work vehicle in a manner that permits turning relative to the work vehicle.

The above and other elements, features, steps, characteristics and advantages of the present invention will become more apparent from the following detailed description of the example embodiments with reference to the attached drawings.

BRIEF DESCRIPTION OF THE DRAWINGS

FIG. **1A** is a schematic top view of a work vehicle and an implement that is linked to the work vehicle, according to an example embodiment of the present invention.

FIG. **1B** is a schematic top view of the work vehicle and the implement that is linked to the work vehicle, according to an example embodiment of the present invention.

FIG. **1C** is a schematic front view of the implement according to an example embodiment of the present invention.

FIG. **1D** is a schematic perspective view of the implement according to an example embodiment of the present invention.

FIG. **2** is a flowchart showing an example procedure of calculating an angle β made by the orientation of the work vehicle and the orientation of the implement according to an example embodiment of the present invention.

FIG. **3A** is a schematic diagram for describing a procedure of calculating the angle β according to an example embodiment of the present invention.

FIG. **3B** is a diagram schematically showing an example relationship between a sensor coordinate system and a vehicle coordinate system.

FIG. **4A** is a block diagram showing an example schematic configuration of a travel control system according to an example embodiment of the present invention.

FIG. **4B** is a block diagram showing an example configuration of a controller included in the travel control system according to an example embodiment of the present invention.

FIG. **5** is a schematic diagram showing another example configuration for the travel control system according to an example embodiment of the present invention.

FIG. **6A** is a flowchart showing an example procedure of calculating the angle β made by the orientation of the work vehicle and the orientation of the implement according to an example embodiment of the present invention.

FIG. **6B** is a schematic diagram for describing a process that may be performed at step **S100.**

FIG. **7** is a flowchart showing an example procedure of calculating the angle β made by the orientation of the work vehicle and the orientation of the implement according to an example embodiment of the present invention.

FIG. **8** is a schematic diagram for describing an example of a process to be performed at step **S220.**

FIG. **9A** is a schematic diagram for describing an example of a process to be performed at step **S220.**

FIG. **9B** is a schematic diagram for describing an example of a process to be performed at step **S220.**

FIG. **10** is a schematic diagram for describing an example of a process to be performed at step **S240.**

FIG. **11A** is a schematic diagram for describing an example of a process to be performed at step **S240.**

FIG. **11B** is a schematic diagram for describing an example of a process to be performed at step **S240.**

FIG. **11C** is a schematic diagram for describing an example of a process to be performed at step **S240.**

FIG. **12A** is a schematic diagram for describing an example of a process to be performed at step **S240.**

FIG. **12B** is a schematic diagram for describing an example of a process to be performed at step **S240.**

FIG. **12C** is a schematic diagram for describing an example of a process to be performed at step **S240.**

FIG. **13** is a block diagram showing an example procedure of calculating the angle β made by the orientation of the work vehicle and the orientation of the implement according to an example embodiment of the present invention.

FIG. **14** is a schematic diagram for describing a method of calculating the position of the center of turning of the implement with respect to the work vehicle.

FIG. **15** is a schematic diagram for describing a method of calculating the position of the center of turning of the implement with respect to the work vehicle.

FIG. **16** is a diagram schematically showing a work vehicle configured so that the relative position of the center of turning of the implement (with respect to the work vehicle) with respect to the vehicle body of the work vehicle is switchable.

FIG. **17** is a side view schematically showing an example of the work vehicle according to an example embodiment of the present invention.

FIG. **18** is a block diagram schematically showing an example configuration for a work vehicle and an implement.

DETAILED DESCRIPTION OF THE EXAMPLE EMBODIMENTS

In the present specification, a "work vehicle" means a vehicle for use in performing work in a work area. A "work area" is any place where work may be performed, e.g., a field, a mountain forest, or a construction site. A "field" is any place where agricultural work may be performed, e.g., an orchard, an agricultural field, a paddy field, a cereal farm, or a pasture. A work vehicle can be an agricultural machine such as a tractor, a rice transplanter, a combine, a vehicle for crop management, or a riding mower, or a vehicle for non-agricultural purposes such as a construction vehicle or a snowplow vehicle. A work vehicle may be configured so that an implement (also referred to as a "task device" or a "task apparatus") that is suitable for the content of work can be attached to at least one of its front and its rear. In particular, an implement that is attached to an agricultural tractor may be referred to as an "agricultural implement". Traveling of a work vehicle that occurs while the work vehicle performs work by using an implement may be referred to as "tasked travel". The "operation" of a work vehicle includes not only travel of the work vehicle but also other operations.

The methods of linking an implement to a work vehicle are generally categorized into "direct mounting" or "towing". In the case of direct mounting, the implement is attached to the front or the rear of the work vehicle in such a manner that the orientation of the implement is fixed relative to the orientation of the work vehicle. An implement that is linked via direct mounting may basically be configured so that it never touches the ground during movement (i.e., travel) of the work vehicle. In the case of via towing, the implement is linked to the rear of the work vehicle in such a manner that the orientation of the implement is not fixed relative to the orientation of the work vehicle, and the implement is to be towed by the work vehicle. A towing type implement may have a wheel(s). A towing type implement may or may not have motive power for movement (travel) on its own.

In the present specification, unless otherwise specified, the "orientation" of a work vehicle or an implement is meant to be the orientation of the work vehicle or implement in a two-dimensional coordinate system. For example, it may be the orientation of the work vehicle or implement as projected onto an xy plane (i.e., the horizontal plane) where an opposite direction of the direction of gravity (vertically upward direction) defines the +z direction.

"Self-driving" means controlling the travel of a vehicle based on the action of a controller, rather than through manual operation of a driver. During self-driving, not only the travel of the vehicle, but also the task operation (e.g., the operation of the implement) may also be automatically controlled. A vehicle that is traveling via self-driving is said to be "self-traveling". The controller may be configured or programmed to control at least one of steering, adjustment of traveling speed, and starting and stopping of travel as are necessary for the travel of vehicle. In the case of controlling a work vehicle having an implement attached thereto, the controller may be configured or programmed to control operations such as raising or lowering of the implement, starting and stopping of the operation of the implement, and the like. Travel via self-driving includes not only the travel of a vehicle toward a destination along a predetermined path, but also the travel of merely following a target of tracking. A vehicle performing self-driving may operate not only in a self-driving mode but also in a manual driving mode of traveling through manual operation of the driver. Traveling through manual operation of the driver is referred to as "manual traveling". "Manual operation of a driver" includes not only manual operation by a driver on the vehicle, but also remote manipulation by a driver (operator) outside the vehicle. A vehicle performing self-driving may travel partly based on manual operation of the driver. The steering of a vehicle that is based on the action of a controller, rather than manual operation of the driver, is referred to as "automatic steering". A portion or an entirety of the controller may be external to the vehicle. Between the vehicle and a controller that is external to the vehicle, communication of control signals, commands, data, or the like may be performed. A vehicle performing self-driving may autonomously travel while sensing the surrounding environment, without any person being involved in the control of the travel of the vehicle. A vehicle that is capable of autonomous travel can travel in an unmanned manner. During autonomous travel, detection of obstacles and avoidance of obstacles may be performed.

A "crop row" is a row of agricultural items, trees, or other plants that may grow in rows on a field, e.g., an orchard or an agricultural field, or in a forest or the like. In the description of the example embodiments of the present invention, a "crop row" encompasses a "row of trees".

Hereinafter, example embodiments of the present invention will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present invention, are not intended to limit the scope of claims. In the following description, component elements having identical or similar functions are denoted by identical reference numerals.

The following example embodiments are only exemplary, and the techniques according to example embodiments of the present invention are not limited to the following example embodiments. For example, numerical values, shapes, materials, steps, orders of steps, etc., that are indicated in the following example embodiments are only exemplary, and admit of various modifications so long as it makes technological sense. Any one example embodiment may be combined with another.

A travel control system according to an example embodiment of the present invention will be described. The travel control system according to the present example embodiment of the present invention controls travel of a work vehicle having an implement linked thereto.

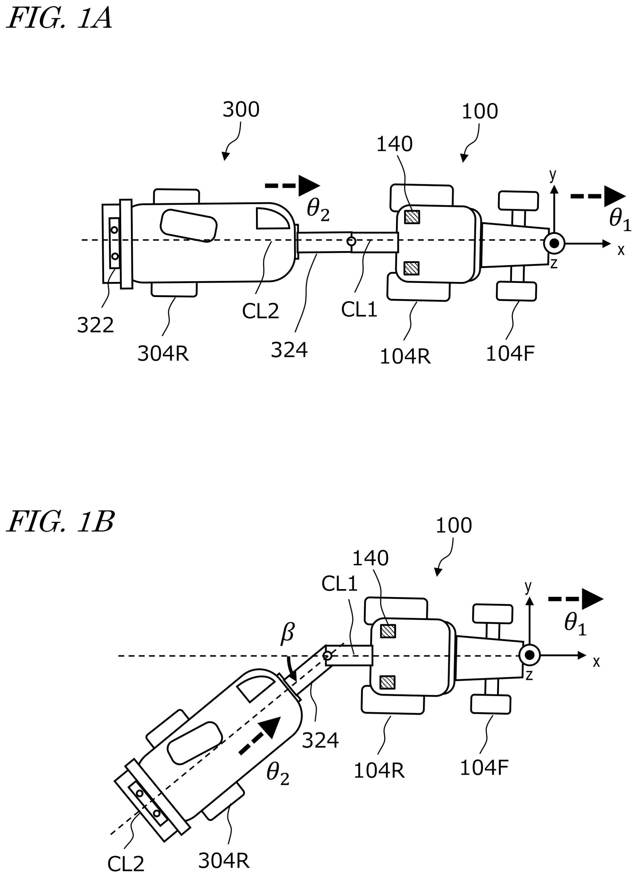

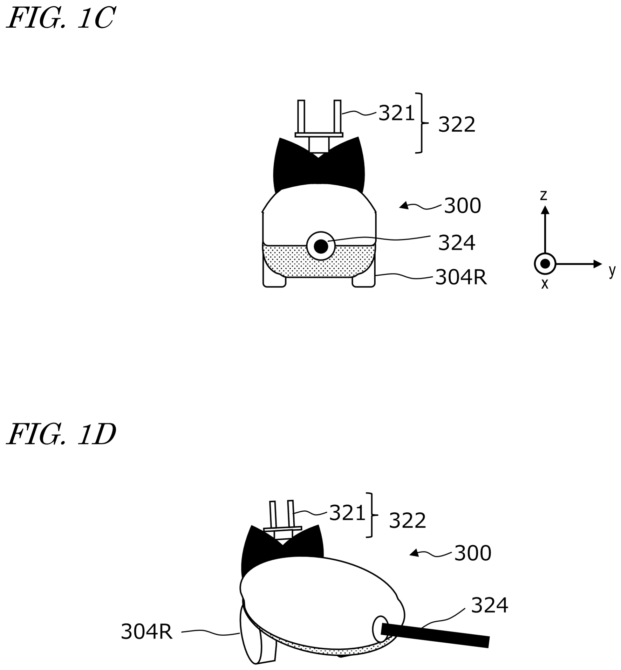

With reference to FIG. **1A,** FIG. **1B,** FIG. **1C,** and FIG. **1D,** an example of a work vehicle and an implement to which a travel control system according to an example embodiment of the present invention is applicable will be described. FIG. **1A** and FIG. **1B** are schematic top views of a work vehicle **100** and an implement **300** linked to the work vehicle **100** (i.e., a schematic diagram in a plane that is orthogonal to the vertical direction). FIG. **1C** is a schematic front view of the implement **300,** and FIG. **1D** is a schematic perspective view of the implement **300.**

As shown in FIG. **1A** and FIG. **1B,** the implement **300** is linked to the work vehicle **100** in a manner that permits turning relative to the work vehicle **100.** In other words, the implement **300** is linked to the work vehicle **100** in such a manner that the orientation θ2 of the implement **300** is not fixed relative to the orientation θ1 of the work vehicle **100.** In this example, the implement **300** is linked to the rear of the work vehicle **100.** Typically, the implement **300** is linked to the work vehicle **100** via towing. FIG. **1A** illustrates a state where the orientation θ1 of the work vehicle **100** and the orientation θ2 of the implement **300** are identical, while FIG. **1B** illustrates a state where the orientation θ1 of the work vehicle **100** and the orientation θ2 of the implement **300** are different. The implement **300** being capable of turning relative to the work vehicle **100** means that an angle β made by the orientation of the work vehicle **100** and the orientation of the implement **300** may vary.

In the illustrated example, the implement **300** is a sprayer. The implement/sprayer **300** is towed by the work vehicle **100** within a field such as an orchard, and used for the work of spreading agrochemicals for crops e.g., (fruit trees) while traveling among a plurality of crop rows (e.g., rows of fruit trees) within the field, for example. Note that, without being limited to this example, example embodiments of the present invention are applicable to various implements.

The work vehicle **100** includes one or more LiDAR sensors **140** attached thereto. The LiDAR sensor(s) **140** outputs point cloud data representing the three-dimensional structure of a surrounding environment of the work vehicle **100,** which includes at least a portion of the implement **300.** In other words, the LiDAR sensor(s) **140** includes at least a portion of the implement **300** in its range of sensing. The work vehicle **100** may further be equipped with any LiDAR sensor(s) that does not include the implement **300** in its range of sensing (e.g., an LiDAR sensor(s) that senses only the frontal direction of the work vehicle **100).**

In the example of FIG. **1A** and FIG. **1B,** in a three-dimensional Cartesian coordinate system that is fixed to the work vehicle **100,** the opposite direction to the direction of gravity (i.e., vertically upward) is defined as the +z direction, and the traveling direction of the work vehicle **100** is defined as the +x direction. Although the origin of the three-dimensional Cartesian coordinate system that is fixed to the work vehicle **100** is shown to be located at the front of the work vehicle **100** in the figures, this is not a limitation, and it may be located in any arbitrary place. It is assumed that the orientation θ**1** of the work vehicle **100** and the orientation θ**2** of the implement **300** define angles with respect to the +x direction in the xy plane. In the figures, the orientation θ**1** of the work vehicle **100** and the orientation θ**2** of the implement **300** are indicated with arrows. Because the traveling direction of the work vehicle **100** and the orientation θ**1** of the work vehicle **100** are identical, θ1=0° in this example. However, without being limited to this example, the orientation of the work vehicle **100** or the implement **300** may be defined as an angle with respect to a reference direction. The orientation θ**1** of the work vehicle **100** is the front-rear direction of the work vehicle **100,** and may be the direction of a straight line **CL1** connecting the midpoint between the right and left front wheels **104F** and the midpoint between the right and left rear wheels **104R,** for example. The orientation θ**2** of the implement **300** is the front-rear direction of the implement **300,** and may be the direction of a straight line **CL2** passing through the midpoint between the right and left wheels **304R,** for example.

As in the example shown in FIG. **1A** and FIG. **1B,** while the work vehicle **100** is traveling, to which the implement **300** is linked in a manner that permits turning relative to the work vehicle **100,** the angle β may change at any moment. In order to control the travel of the work vehicle **100** as such, it is necessary to calculate the angle β**.** As will be described below, a travel control system according to an example embodiment of the present invention is able to calculate the angle β while the work vehicle **100** is traveling.

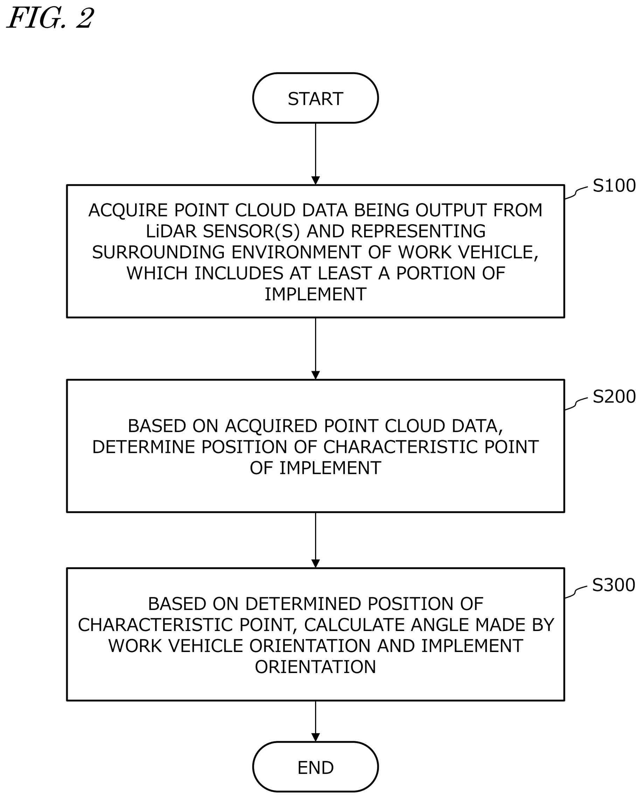

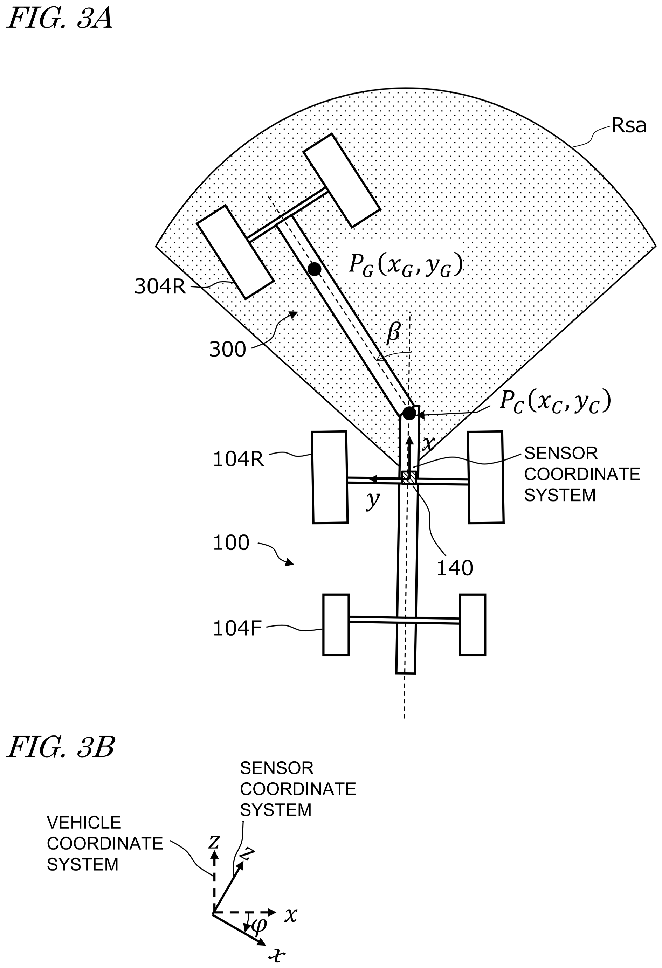

FIG. **2** is a flowchart showing an example procedure of calculating the angle β made by the orientation of the work vehicle **100** and the orientation of the implement **300** according to an example embodiment of the present invention. FIG. **3A,** which is a schematic top view of the work vehicle **100** and the implement **300** linked to the work vehicle **100,** is a schematic diagram for describing the procedure of calculating the angle β according to an example embodiment of the present invention.

In the example of FIG. **3A,** an xy plane of a sensor coordinate system that is fixed to the LiDAR sensor(s) **140** is shown. In the illustrated example, an opposite direction to the traveling direction of the work vehicle **100** is defined as the +x direction. Parameters for a coordinate transform, from the sensor coordinate system that is fixed to the LiDAR sensor(s) **140** to a vehicle coordinate system that is fixed to the work vehicle **100,** may be determined through a calibration before the work vehicle **100** begins usual travel (e.g., at a trial run). FIG. **3B** schematically shows an example relationship between a sensor coordinate system and a vehicle coordinate system.

In FIG. **3A,** an example of a range **Rsa** to be sensed by the LiDAR sensor(s) **140** is schematically shown. The range **Rsa** to be sensed by the LiDAR sensor(s) **140** includes at least a portion of the implement **300.** Although only one LiDAR sensor **140** is illustrated in FIG. **3A** for simplicity, a plurality of LiDAR sensors **140** may be attached to the work vehicle **100,** without being limited to this example.

As shown in FIG. 2 and FIG. **3A,** the procedure of calculating the angle β made by the orientation of the work vehicle **100** and the orientation of the implement **300** includes acquiring point cloud data being output from the LiDAR sensor(s) **140** and representing the surrounding environment of the work vehicle **100,** which includes at least a portion of the implement **300** (step **S100),** determining the position of a characteristic point $P_G$ of the implement **300** based on the point cloud data acquired in step **S100** (step **S200),** and calculating the angle β made by the orientation of the work vehicle **100** and the orientation of the implement **300** based on the position of the characteristic point $P_G$ as determined in step **S200** (step **S300).** In the present specification, to calculate (or determine) based on a certain element means that the element affects the calculation (or determination) in some ways, and does not preclude any other element from affecting the calculation (or determination). For example, at step **S200,** the position of the characteristic point $P_G$ may be determined based on the point cloud data acquired in step **S100** and other factors. The same also applies to anywhere the expression "based on..." is used in contexts outside calculation or determination.

A "characteristic point(s) of the implement **300"** is one or more points to be used for identifying the position of the implement **300.** A characteristic point of the implement **300** may be a point that is defined by a characteristic shape (e.g., an edge, a corner, etc.) of the implement **300** or a member that is attached to the implement **300,** or be a characteristic point that is determined or calculated from point cloud data that is acquired by sensing the implement **300** or a member that is attached to the implement **300,** for example. As used herein, "a member that is attached to the implement **300"** refers to a member that is attached with a fixed position relationship with respect to the implement **300.** Specific examples of characteristic points of the implement **300** will be described later.

Because of calculating the angle β by using point cloud data that is output from the LiDAR sensor(s), a travel control system according to an example embodiment of the present invention can reduce the processing load for the calculation as compared to the case of performing the calculation by using image data, for example. In the case where the angle β is calculated by using image data, a marker that is attached to the implement may be used, for example. In such a case, soil or the like adhering to the marker may deteriorate the accuracy of calculation. According to example embodiments of the present invention, even in a case where a marker attached to the implement is used, influences of soil or the like on the marker are reduced by the use of point cloud data that is output from the LiDAR sensor(s). Furthermore, according to example embodiments of the present invention, it is possible to calculate the angle β without attaching a positioning device (e.g., a GNSS unit) to the implement, thus eliminating the need to provide extra wiring or the like, for example. Therefore, cost increases associated with calculation of the angle β can be reduced or prevented.

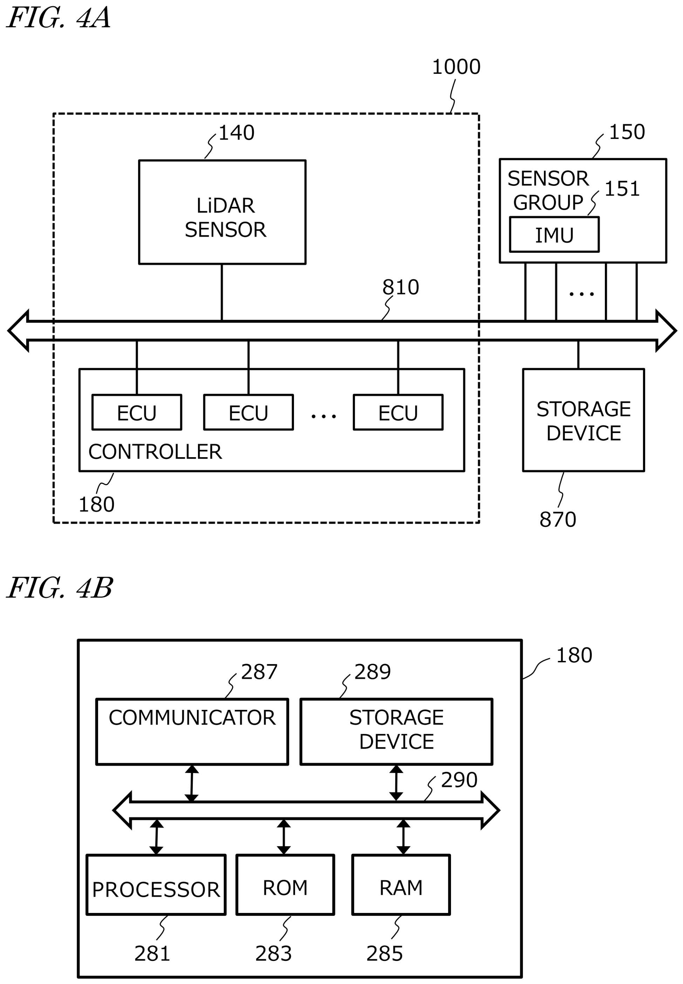

FIG. **4A** is a block diagram showing an example schematic configuration of a travel control system **1000** according to an example embodiment of the present invention. FIG. **4B** is a block diagram showing an example configuration of a controller **180** included in the travel control system **1000.**

As shown in FIG. **4A,** the travel control system **1000** includes one or more LiDAR sensors **140** attached to the work vehicle **100** and the controller **180** configured or programmed to control the travel of the work vehicle **100.** The controller **180** may include ECUs that are mounted to the work vehicle **100,** for example. For instance, ECUs that are mounted to the work vehicle **100** may function as the controller **180,** and cooperate with the LiDAR sensor(s) **140** to function as the travel control system **1000** of the work vehicle **100.** The controller **180** and the LiDAR sensor(s) **140** may be connected so as to be capable of communicating with one another via a bus **810.**

FIG. **4A** also shows a storage device **870** in which information that is acquired by the controller **180** is to be recorded. The storage device **870** may be included in the travel control system **1000,** or be an external element to the travel control system **1000.** The storage device **870** may be mounted to the work vehicle **100** or the implement **300,** for example. In such a case, the storage device **870** may be connected so as to be capable of communicating with one another to the controller **180** via the bus **810.** The storage device **870** may be located external to the work vehicle **100** and the implement **300.** When located external to the work vehicle **100** and the implement **300,** the storage device **870** may be connected to the controller **180** via a communications network.

FIG. **4A** also shows a sensor group **150** that detects a state of the work vehicle **100,** and outputs sensor data concerning the state of the work vehicle **100.** The sensor group **150** includes one or more sensors. A portion or an entirety of the sensor group **150** may be included in the travel control system **1000,** or be an external element(s) to the travel control system **1000.** The sensor group **150** is mounted to the work vehicle **100,** and may be connected to the controller **180** and/or the LiDAR sensor(s) **140** via the bus **810** so as to be capable of communicating with one another.

The sensor group **150** may include, for example, an IMU (Inertial Measurement Unit) **151.** The IMU **151** may include a 3-axis accelerometer and a 3-axis gyroscope. The IMU **151** may include a direction sensor such as a 3-axis geomagnetic sensor. The IMU **151** functions as a motion sensor which can output signals representing parameters such as acceleration, velocity, displacement, and attitude of the work vehicle **100.** Instead of the IMU **151,** a 3-axis accelerometer and a 3-axis gyroscope may be separately provided.

Without being limited to the IMU **151,** the sensor group **150** may include various sensors that are mounted to the work vehicle **100.** For example, the sensor group **150** may include one or more sensors selected from among a steering wheel sensor, an angle-of-turn sensor, an axle sensor, a temperature sensor, an illuminance sensor, a fuel sensor, a water temperature sensor, an oil level gauge, an engine revolution sensor, a vehicle speed sensor, a battery voltage sensor, a shuttle sensor, a hand accelerator sensor, an accelerator pedal sensor, a main shift lever sensor, a range shift lever sensor, a seat belt sensor, a PM sensor, an acceleration sensor, an angular velocity sensor, and a geomagnetic sensor. The sensor group **150** may further include a sensor to output sensor data concerning the state of the implement **300.** The sensor group **150** may include one or more sensors mounted to the implement **300.** For example, the sensor group **150** may include an IMU that is attached to the implement **300.**

The controller **180** included in the travel control system according to the example embodiment of the present invention is configured or programmed to control travel of the work vehicle **100** based on the calculated angle β. For example, based on the calculated angle β, the controller **180** may be configured or programmed to generate a path (i.e., a target path) for the work vehicle **100** to travel. For example, by controlling a driver that drives a travel device (including the front wheels **104F** and rear wheels **104R)** of the work vehicle **100** based on the calculated angle β, the controller **180** can perform steering control for the front wheels **104F,** which are the wheels responsible for steering.

The travel control system according to the present example embodiment of the present invention can be used not only when the work vehicle **100** performs self-traveling, but also when the work vehicle **100** performs manual traveling. For example, the controller **180** may cause information of the calculated angle β to be displayed on a display device which is included in the work vehicle **100.** The controller **180** may be configured or programmed to cause information of the calculated angle β to be displayed by an operation terminal of a human driver (operator) outside the work vehicle **100.** A human driver on the work vehicle **100** or a human driver (operator) outside the work vehicle **100** who operates the work vehicle **100** may perform operation of the work vehicle **100** while watching information of the angle β being displayed on the display device or the operation terminal.

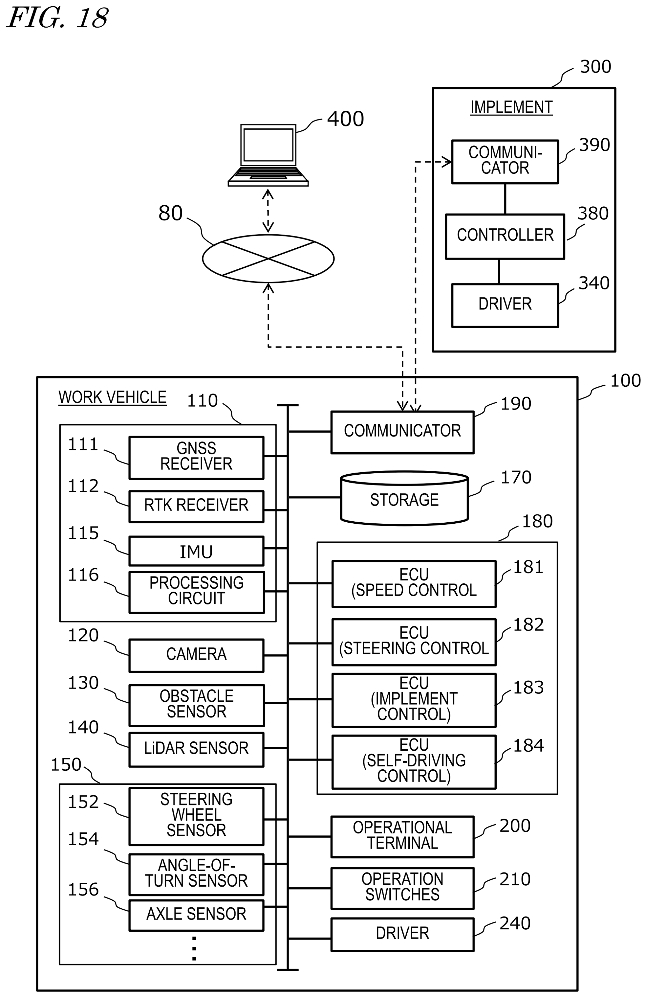

In the example shown in FIG. **4A,** the controller **180** includes a plurality of ECUs. The plurality of ECUs included in the controller **180** may include ECUs **181** to **184** shown in FIG. **18** described below, for example. Without being limited to this example, the controller **180** may be a single ECU or other computer. FIG. **4B** is a block diagram showing an example configuration of such a controller **180.** In the example of FIG. **4B,** the controller **180** includes a processor **281,** a ROM (Read Only Memory) **283,** a RAM (Random Access Memory) **285,** a communicator **287,** and a storage device **289.** These component elements may be connected to one another via a bus **290.**

The processor **281** may be a semiconductor integrated circuit, also called a central processing unit (CPU) or a microprocessor. The processor **281** may include a graphics processing unit (GPU). The processor **281** consecutively executes a computer program describing predetermined instructions and being stored in the ROM **283,** and achieves processes that are performed by the travel control system according to the example embodiment of the present invention. The controller **180** may include a plurality of processors **281.** The plurality of processors **281** may work in cooperation to perform the processes that are performed by the travel control system according to the present example embodiment of the present invention. A portion or an entirety of the processor **281** may be an FPGA (Field Programmable Gate Array), an ASIC (Application Specific Integrated Circuit), or an ASSP (Application Specific Standard Product) incorporating a CPU.

The communicator **287** is an interface to perform data communications between the controller **180** and an external computer. The communicator **287** is capable of wired communications via a CAN (Controller Area Network) or the like, or wireless communications compliant with the Bluetooth (registered trademark) standards and/or the Wi-Fi (registered trademark) standards.

The storage device **289** can store point cloud data acquired from the LiDAR sensor(s) **140,** sensor data acquired from the sensor group **150,** any data that is in the middle of processing, etc. The storage device **289** includes a hard disk drive or a non-volatile semiconductor memory, for example. In this example, the storage device **289** may serve as the storage device **870** in the example of FIG. **4A.**

The hardware configuration of the controller **180** is not limited to the above example. It is not necessary for a portion or an entirety of the controller **180** to be mounted in the work vehicle **100.** By utilizing the communicator **287,** a computer or computers located outside the work vehicle **100** may be allowed to function as a portion or an entirety of the controller **180.** For example, a computer or computers included in a server computer(s) and/or a terminal device(s) that is connected to a network may function as a portion or an entirety of the controller **180.** On the other hand, a computer or computers that is mounted in the work vehicle **100** may perform all functions required of the controller **180.**

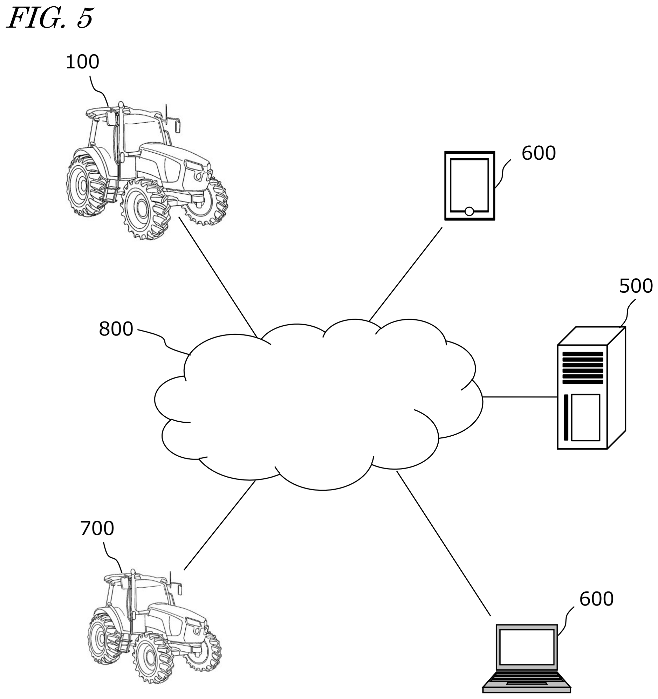

FIG. **5** is a schematic diagram showing another example configuration for a travel control system according to an example embodiment of the present invention. The system shown in FIG. **5** includes the work vehicle **100,** another work vehicle **700,** a server computer **500,** and a plurality of terminal devices **600.** The terminal devices **600** may be either mobile or stationary terminal devices. A portion or an entirety of the functionality of the controller **180** shown in FIG. **4B** may be realized by one or more computers that are connected to the communicator **287** of the controller **180** of the work vehicle **100** via a communications network **800.** Such a computer(s) may be the server computer **500** or the terminal device(s) **600.** This communications network **800** may have the other work vehicle (e.g., agricultural machine) **700** connected thereto. Communication may be performed between the controller **180** of the work vehicle **100** and the other work vehicle **700.** Via the communications network **800,** a portion of the data to be used for the processing by the controller **180** of the work vehicle **100** may be supplied from the other work vehicle **700** to the controller **180.**

As shown in FIG. **4B,** an example of the "controller" according to an example embodiment of the present invention is a computer that includes at least one processor and at least one memory storing a computer program (code) defining control processes to be executed by the processor. The "controller" may be a computer equipped with an FPGA (Field-Programmable Gate Array), an ASSP (Application Specific Standard Product), an ASIC (Application-Specific Integrated Circuit), or other hardware accelerators configured to execute the control processes.

A "processor" in an example embodiment of the present invention is a hardware electronic circuit such as a CPU (Central Processing Unit), a GPU (Graphics Processing Unit), a DSP (Digital Signal Processor), an ISP (Image Signal Processor), or an NPU (Neural Network Processing Unit). A "memory" is a hardware electronic circuit such as a ROM (Read Only Memory) or a RAM (Random Access Memory). A portion of the memory may be a storage medium that is connected to the processor via interconnects or a network. These hardware electronic circuits may be implemented by one or more integrated circuits (IC) or large-scale integrated circuits (LSI). Each functional unit or block and its associated components within the electronic circuit may be individually manufactured as an individual integrated circuit chip, or a portion or an entirety of these functional units or blocks may be combined so as to be manufactured as a single integrated circuit chip.

A program defining the operation of a processor is designed so that the processor will execute one or more functions, manipulations, steps, or process according to an example embodiment of the present invention.

Details of the process to be performed at each of the steps shown in FIG. 2 and specific examples thereof will be described.

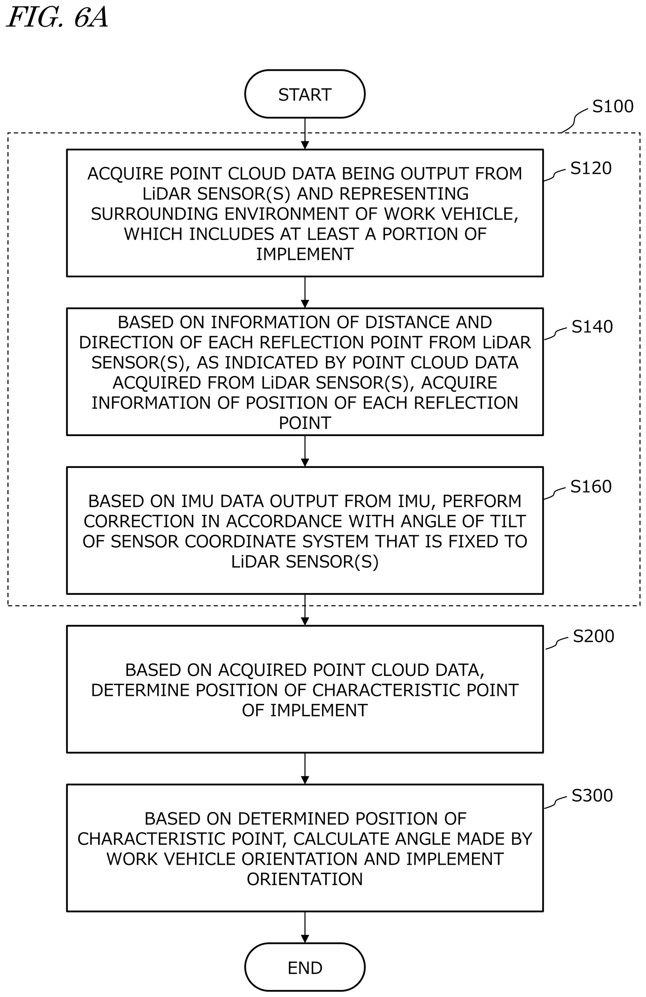

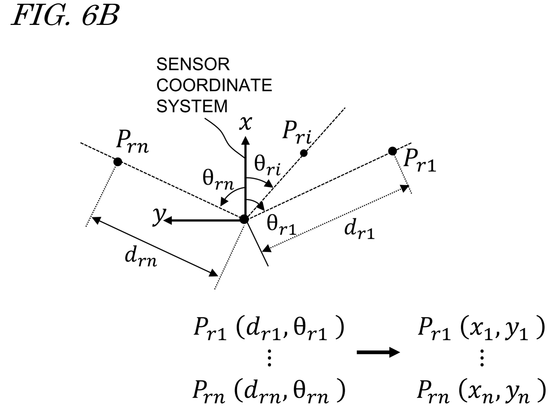

With reference to FIG. **3A,** FIG. **6A,** and FIG. **6B,** an example of a process to be performed at step **S100** will be described. At step **S100,** the controller **180** is configured or programmed to acquire point cloud data being output from the LiDAR sensor(s) **140** and representing the surrounding environment of the work vehicle **100,** which includes at least a portion of the implement **300.** FIG. **6A** is a flowchart showing an example procedure of calculating the angle β made by the orientation of the work vehicle **100** and the orientation of the implement **300** according to an example embodiment of the present invention. The flowchart of FIG. **6A** differs from the flowchart of FIG. **2** in that step **S120,** step **S140,** and step **S160** are included as step **S100**. FIG. **6B** is a schematic diagram for describing a process that may be performed at step **S100**.

As shown in FIG. **6A,** for example, at step **S100,** the processes of steps **S120, S140** and **S160** below may be performed.

At step **S120,** the controller **180** is configured or programmed to acquire point cloud data being output from the LiDAR sensor(s) **140** and representing the surrounding environment of the work vehicle **100,** which includes at least a portion of the implement **300.** The travel control system according to the present example embodiment of the present invention can consecutively calculate the angle β while the work vehicle **100** is traveling. For example, while the work vehicle **100** is traveling, the surrounding environment is scanned with laser beams by using the LiDAR sensor(s) **140.** As a result, information of the distance and direction to reflection points on the surface of any object (which includes at least a portion of the implement **300)** that is located in the range of sensing by the LiDAR sensor(s) **140** can be obtained. In other words, the LiDAR sensor(s) **140** outputs sensor data $(dr_i, \theta r_i)(i=1,2,...,n)$ representing a distance and direction to each reflection point $Pr_i$. Herein, the distance for the reflection point $Pr_i$ is designated as $dr_i$, and the orientation of the reflection point $Pr_i$ is designated as $\theta r_i$.

At step **S140,** based on the information of each reflection point's distance and direction from the LiDAR sensor(s) **140** as indicated by the point cloud data acquired from the LiDAR sensor(s) **140** in step **S120,** the controller **180** configured or programmed to acquire information of the position of each reflection point. For example, as shown in FIG. **6B,** the controller **180** converts the sensor data $(dr_i, \theta r_i)$ which is output from the LiDAR sensor(s) **140** into point cloud data including information $(x_i, y_i)$ of the position of each reflection point in a two-dimensional coordinate system, as expressed by the sensor coordinate system that is fixed to the LiDAR sensor(s) **140.** The conversion process by the controller **180** is omitted in a case where the LiDAR sensor(s) **140** converts, prior to outputting, the point cloud data of distance and direction to each reflection point into point cloud data of coordinates of the position of each reflection point.

As will be described later, once information of the position of each reflection point in the two-dimensional coordinate system is obtained, then the position of the characteristic point $\mathbf{P_G}$ of the implement **300** can be determined. Therefore, a two-dimensional LiDAR sensor(s) can be used as the LiDAR sensor(s) **140.** In that case, the point cloud data obtained from the LiDAR sensor(s) **140** is two-dimensional point cloud data including two-dimensional position information. It will be appreciated that a three-dimensional LiDAR sensor(s) may also be used as the LiDAR sensor(s) **140.** For example, some or all of the LiDAR sensor(s) included in the work vehicle **100** may be used as the LiDAR sensor(s) of the travel control system according to the present example embodiment of the present invention. If a LiDAR sensor(s) is to be provided anew for the sake of angle β calculation, since two-dimensional LiDAR sensors are less expensive than three-dimensional LiDAR sensors, use of two-dimensional LiDAR sensors will reduce cost increases associated with the angle β calculation.

At step **S160,** the controller **180** may be configured or programmed to perform a correction in accordance with the angle of tilt of the sensor coordinate system that is fixed to the LiDAR sensor(s) **140,** based on the IMU data which is output from the IMU **151.** For example, when the xy plane in the sensor coordinate system that is fixed to the LiDAR sensor(s) **140** is significantly inclined from the horizontal plane, as in a case where the work vehicle **100** travels on a ground surface which includes a number of slopes or rises and falls, performing a correction in accordance with the angle of tilt of the sensor coordinate system allows information of coordinates of the position of each reflection point to be obtained with a high accuracy. The IMU data which is output from the IMU **151** may contain information of the acceleration, velocity, displacement, attitude, time of measurement (time stamp), etc., of the work vehicle **100.** Based on the information of the attitude of the work vehicle **100** that is included in the IMU data (e.g., roll angle information), the controller **180** can determine an angle of tilt of the LiDAR sensor(s) **140** (i.e., angle of tilt of the sensor coordinate system). The IMU data is output at a frequency of about several ten to several thousand times per second, for example. This output cycle is generally shorter than the output cycle of scan data by the LiDAR sensor(s) **140.** Alternatively, in a case where an IMU is also attached to the implement **300,** based on the IMU data which is output from the IMU **151** and on the IMU data which is output from the IMU that is attached to the implement **300,** a relative attitude angle of the implement **300** with respect to the work vehicle **100** (e.g., roll angle) may be calculated, and the angle of tilt of the sensor coordinate system may be corrected by using this calculated value. The process of step **S160** is optional, and may be omitted.

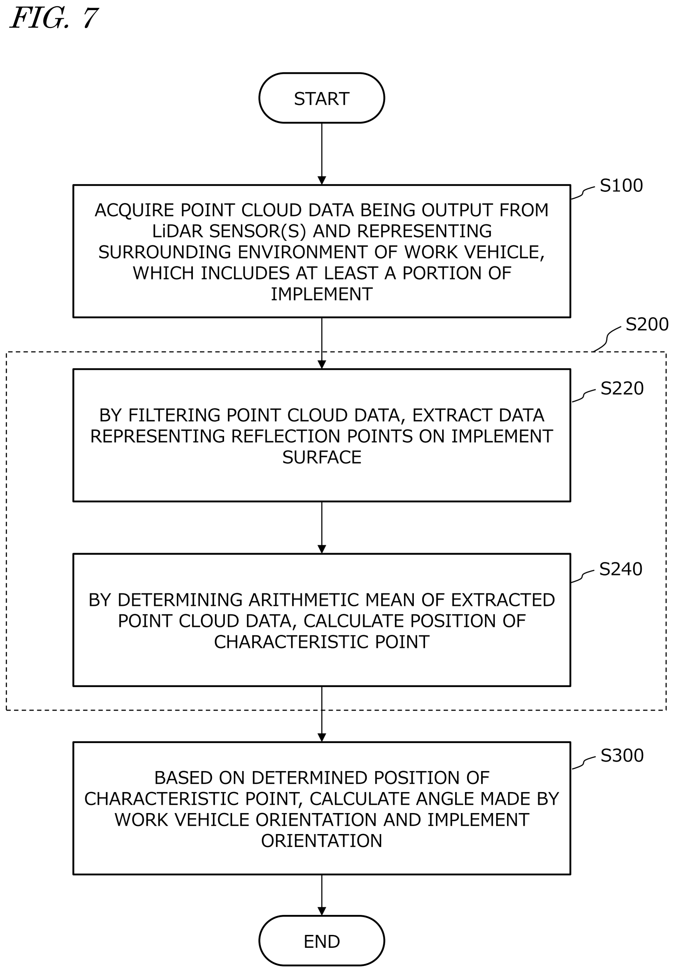

With reference to FIG. 7, an example of a process that may be performed at step **S200** will be described. At step **S200,** based on the point cloud data acquired in step **S100,** the controller **180** determines a position of the characteristic point $\mathbf{P_G}$ of the implement 300. FIG. **7** is a flowchart showing an example procedure of calculating the angle β made by the orientation of the work vehicle **100** and the orientation of the implement **300** according to an example embodiment of the present invention. The flowchart of FIG. **7** differs from the flowchart of FIG. **2** in that step **S220** and step **S240** are included as step **S200.**

As shown in FIG. **7,** at step **S220,** the processes of steps **S220** and **S240** may be performed.

At step **S220,** the controller **180** is configured or programmed to filter the point cloud data acquired in step **S100** to extract data representing reflection points on the surface of the implement **300.** For example, as described above, point cloud data of two-dimensional coordinates of each reflection point in the sensor coordinate system that is fixed to the LiDAR sensor(s) **140** is acquired, and subjected to filtering.

For example, by downsampling the point cloud data acquired from the LiDAR sensor(s) **140,** the controller **180** is configured or programmed to perform filtering of the point cloud data. For example, downsampling may be performed with a voxel grid filter. In a voxel grid filter, the following processing is performed. First, the three-dimensional space of the sensor coordinate system is split into a plurality of voxels of a constant size. Although the length of one side of the cube constituting each voxel may be arbitrary set, it may for example be not less than 1 cm and not more than about 10 cm, e.g., about 5 cm, for example. In a case where each voxel includes a plurality of points, such points may be replaced with a single point. For example, the plurality of points included in each voxel is replaced with a single point that is located at the centroid of that voxel. By downsampling the point cloud data, the number of points in the point cloud data can be reduced, and the process can be made rapid. Using a voxel grid filter makes it possible to uniformly thin out the point cloud data acquired from the LiDAR sensor(s) **140,** thus resulting in a reduced number of points. Without being limited to a voxel grid filter, any known downsampling may be used. When the data size of the point cloud data acquired from the LiDAR sensor(s) **140** is not an issue, the downsampling process may be omitted.

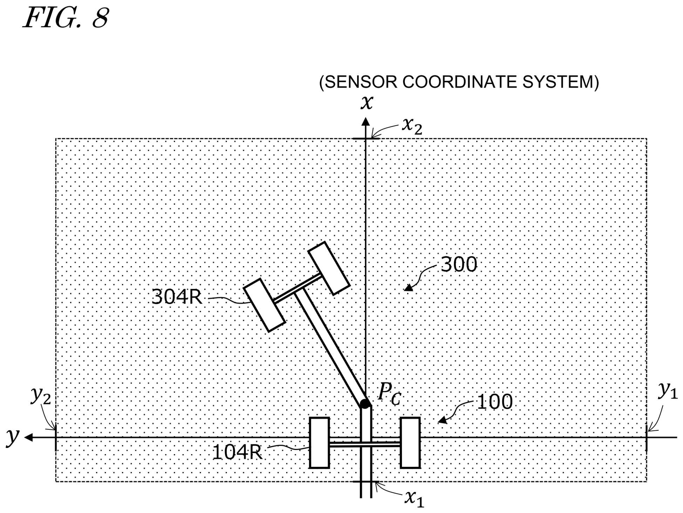

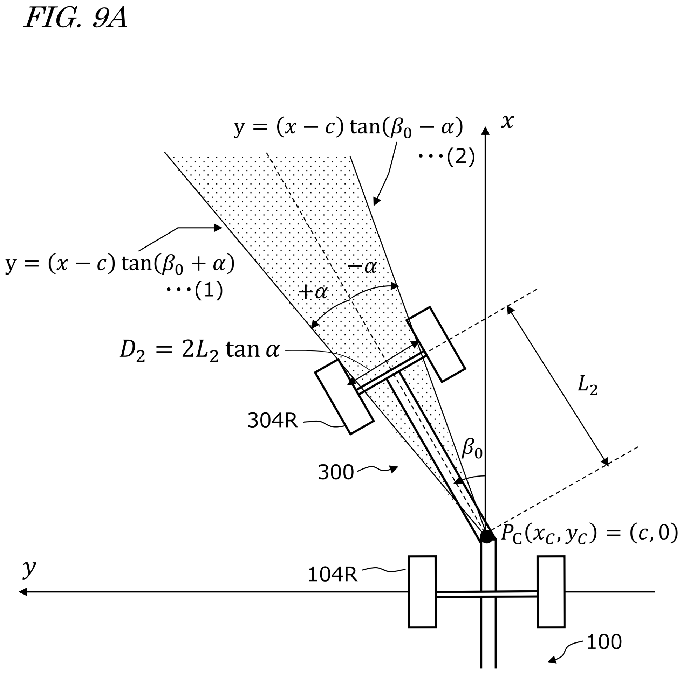

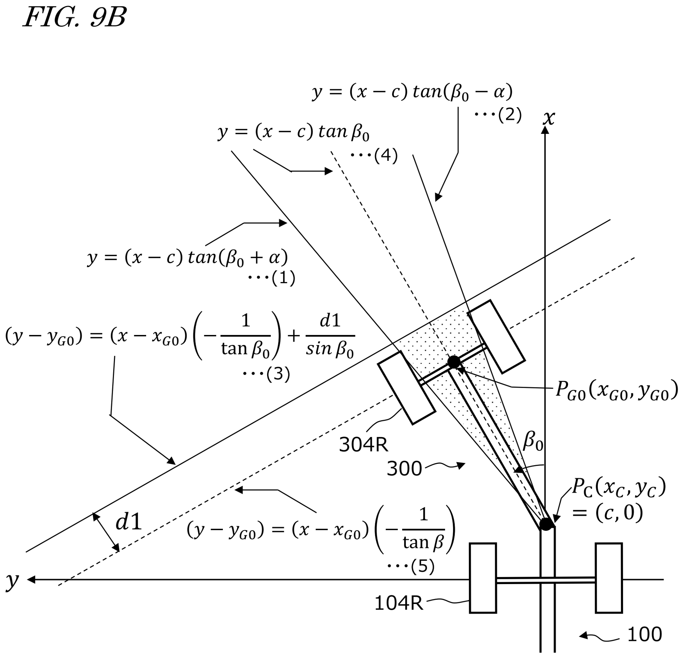

Examples of other methods of filtering will be described with reference to FIGS. **8, 9A** and **9B.** The filtering processes shown in FIGS. **8, 9A** and **9B** may be performed in combination with the aforementioned downsampling process. FIGS. **8, 9A** and **9B** are schematic diagrams for describing examples of the process to be performed at step **S220.**

As shown in FIGS. **8, 9A** and **9B,** for example, the controller **180** is configured or programmed to filter the point cloud data acquired from the LiDAR sensor(s) **140** based on the coordinates of reflection points. As shown in FIGS. **8, 9A** and **9B,** within the xy plane of the sensor coordinate system that is fixed to the LiDAR sensor(s) **140,** those reflection points which are located in a predetermined range are extracted. In each figure, a predetermined range is shown hatched in which the reflection points to be extracted are located. In the example of FIG. **8,** for example, reflection points which are located in the range of $x1 \leq x \leq x2$ and $y1 \leq y \leq y2$ are extracted. In the example of FIG. **9A,** reflection points which are located in the range between eq. (1) and eq. (2) are extracted. In the example of FIG. **9B,** reflection points which are located in the range between eq. (1), eq. (2) and eq. (3) are extracted. Now, symbols in FIGS. **8, 9A** and **9B** and the equations represent the following.

point **Pc:** center of turning of the implement **300** with respect to the work vehicle **100**
point $P_{G0}$: previously-calculated characteristic point of the implement **300**
$\beta_0$: previously-calculated angle $\beta$
**a:** angle determining a range of extraction
**d1:** length determining a range of extraction
x coordinate and y coordinate of point Pc will be designated as (xc, yc), and x coordinate and y coordinate of the characteristic point $P_{G0}$ of the implement **300** as $(x_{G0}, y_{G0})$, respectively. It is assumed that angle $\beta_0$ and angle $\alpha$ are angles with respect to the +x direction of the sensor coordinate system that is fixed to the LiDAR sensor(s) **140.**

The angle $\alpha$ and the length **d1** may be appropriately set in accordance with the range to be extracted (e.g., in accordance with the size and position of the implement **300).** For example, they may be set based on user-input values. For example, the angle a may be determined based on a relationship between a distance $D_2$ between the wheels **304R** of the implement **300** (see FIG. **9A)** and the angle a. As in the example of FIG. **9A)** or FIG. **9B,** filtering of the point cloud data may be performed by extracting any instance of the point cloud data that falls in a predetermined angle range (e.g., $\beta_0 \pm \alpha$ in the illustrated example) from an angle $\beta_0$, which is a previously-calculated angle $\beta$. As in the example of FIG. **9B,** filtering of the point cloud data may be performed by extracting any instance of that point cloud data that falls in a predetermined distance range from a previously-calculated position $P_{G0}$ of the characteristic point.

The angle $\beta_0$ is a previously-calculated angle $\beta$, in a case where the controller **180** performs the angle $\beta$ calculation at every predetermined time interval, for example, it may be an immediately previously-calculated angle $\beta$. Similarly, the point $P_{G0}$ is a previously-calculated characteristic point of the implement **300,** in a case where the controller **180** performs angle $\beta$ and characteristic point calculations at every predetermined time interval, for example, it may be an immediately previously-calculated characteristic point.

As in the example shown in FIG. **1A** to FIG. **1D,** the implement **300** may have a marker **322** attached thereto which is located within the range of sensing by the LiDAR sensor(s) **140.** The marker **322** reflects light that is emitted from the LiDAR sensor(s) **140.** Providing the marker **322** may facilitate the aforementioned filtering process of point cloud data. However, the marker is not essential, and may be omitted. In the illustrated example, the marker **322** includes a pair of pillar structures **321.** The shape of each pillar structure **321** may be a prism (e.g., a triangular prism or a quadrangular prism) or a circular column. Only one pillar structure may be provided. Preferably, the marker **322** is symmetric with respect to an axis extending along the front-rear direction of the implement **300.** For example, it is preferable the marker **322** is provided on an axis extending along the front-rear direction of the implement **300.** When not symmetric with respect to the axis extending along the front-rear direction of the implement **300,** the controller **180** preferably performs an advance calibration (i.e., while the work vehicle **100** travels straight) in order to acquire parameters representing a position relationship between the marker **322** and the LiDAR sensor(s) **140.**

At step **S240,** the controller **180** is configured or programmed to determine an arithmetic mean of the point cloud data extracted in step **S220,** thus calculating the position of the characteristic point of the implement **300.**

Specifically, it may be assumed that the point cloud data extracted in step **S220** is:

[eq. 1]

$$ P \ni \{p_1, p_2, \cdots, p_n\}, \quad p_k = (x_k, y_k) $$,

then,

the position $(x_G, y_G)$ of the characteristic point $P_G$ of the implement **300** is calculated by deriving an arithmetic mean of such point cloud data in the following manner:

[eq. 2]

$$ x_G = \frac{1}{n} \sum_{k=1}^{n} x_k, \quad y_G = \frac{1}{n} \sum_{k=1}^{n} y_k $$.

Because the position of the characteristic point $P_G$ can be determined by deriving an arithmetic mean of point cloud data, the processing load can be restrained from increasing.

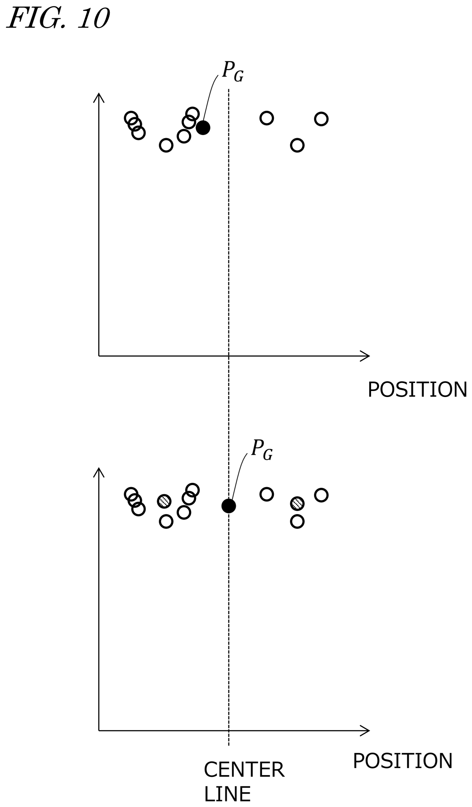

With reference to FIG. **10,** an example of the process to be performed at step **S240** will be described.

At step **S240,** the controller **180** may be configured or programmed to calculate the position of the characteristic point of the implement **300** by determining a weighted mean of the point cloud data extracted in step **S220.** A weighted mean is an average that is calculated with a weight applied to each data. The upper portion of FIG. **10** schematically illustrates an example of determining an arithmetic mean of point cloud data, while the lower portion of FIG. **10** schematically illustrates an example where a weighted mean is determined of the same point cloud data. In the figure, the horizontal axis represents position, with blank circles indicating a distribution of the point cloud data extracted in step **S220.** Even in a case where the implement **300** has a bilaterally symmetric shape, when the number of point cloud data is unbalanced between right and left as in the figure, a calculated arithmetic mean (as indicated by a dark circle) will be considerably deviated from the center line between right and left (which is indicated by a broken line), as shown in the upper portion of FIG. **10.** In other words, the characteristic point $P_G$ will be significantly deviated from the center line between right and left. In such a case, the deviation of the characteristic point from the center line between right and left can be suppressed by determining a weighted mean as shown in the lower portion of FIG. **10.** In the example shown in the lower portion of FIG. **10,** the point cloud data is split into right and left groups with respect to the center line between right and left; an arithmetic mean is determined for each group (a result thereof being indicated with an obliquely hatched circle), and an arithmetic mean of these is determined (a result thereof being indicated with a dark circle). The deviation of the calculated characteristic point $P_G$ from the center line between right and left is suppressed.

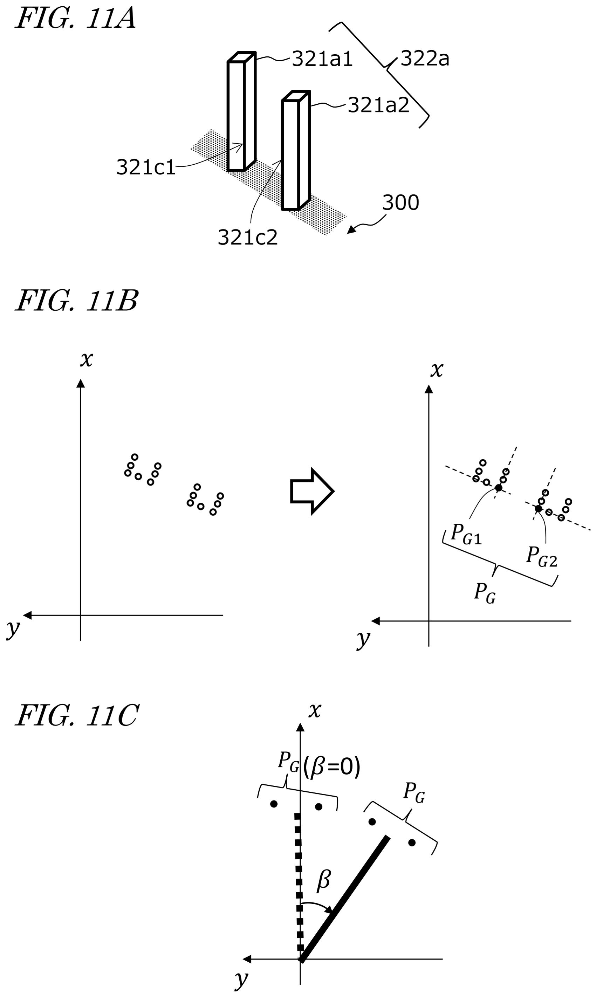

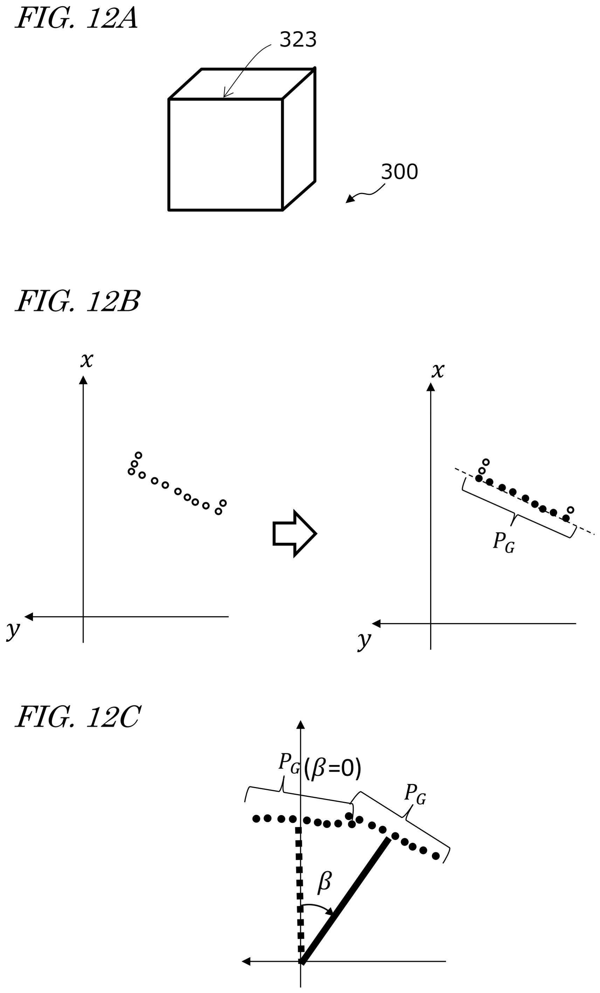

With reference to FIG. **11A,** FIG. **11B** and FIG. **11C** and FIG. **12A,** FIG. **12B** and FIG. **12C,** other examples of the process to be performed at step **S240** will be described. As will be described below, the controller **180** may be configured or programmed to determine the position of the characteristic point by detecting the characteristic shape of the implement **300** or a member that is attached to the implement **300,** based on the point cloud data extracted in step **S220.**

In the example of FIG. **11A** to FIG. **11C,** a marker **322a** that is located in the range of sensing by the LiDAR sensor(s) **140** is attached to the implement **300,** as shown in FIG. **11A.** The marker **322a** includes a pair of prismatic structures **321a1** and **321a2.** In the left portion of FIG. **11B,** blank circles schematically represent the point cloud data extracted in step **S220.** Among these, as shown in the right portion of FIG. **11B,** a reflection point on a corner **321c1** of the prismatic structure **321a1** and a reflection point on a corner **321c2** of the prismatic structure **321a2** are extracted, thus determining a characteristic point $P_{G1}$ and a characteristic point $P_{G2}$, respectively. The characteristic point $P_{G1}$ and the characteristic point $P_{G2}$ are depicted as dark circles. Any known method may be used as a method of extracting a reflection point on a corner. The characteristic point $P_{G1}$ and the characteristic point $P_{G2}$ may be collectively referred to as characteristic points $P_G$. As shown in FIG. **11C,** based on the positions of the characteristic points $P_G$, the angle β is calculated. A method of calculating of the angle β will be described below.

In the example of FIG. **12A** to FIG. **12C,** an edge (side) **323** of the implement **300** or a member that is attached to the implement **300** is used for the determination of the characteristic point, as shown in FIG. **12A.** In the left portion of FIG. **12B,** blank circles schematically represent the point cloud data extracted in step **S220.** Among these, as shown in the right portion of FIG. **12B,** a reflection point(s) on the edge **323** is extracted, thereby determining a characteristic point(s) $P_G$. The characteristic point(s) $P_G$ may include a plurality of points. The characteristic points $P_G$ are depicted as dark circles. Any known method may be used as a method of extracting reflection points on an edge. As shown in FIG. **12C,** based on the position(s) of the characteristic point(s) $P_G$, the angle β is calculated. A method of calculating of the angle β will be described below.

At step **S300,** based on the position ($x_G$,$y_G$) of the characteristic point $P_G$ of the implement **300** calculated in step **S200,** the controller **180** calculates the angle β.

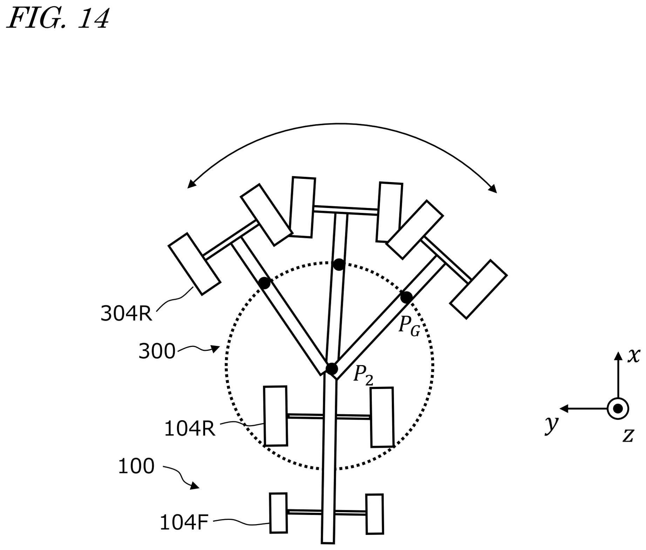

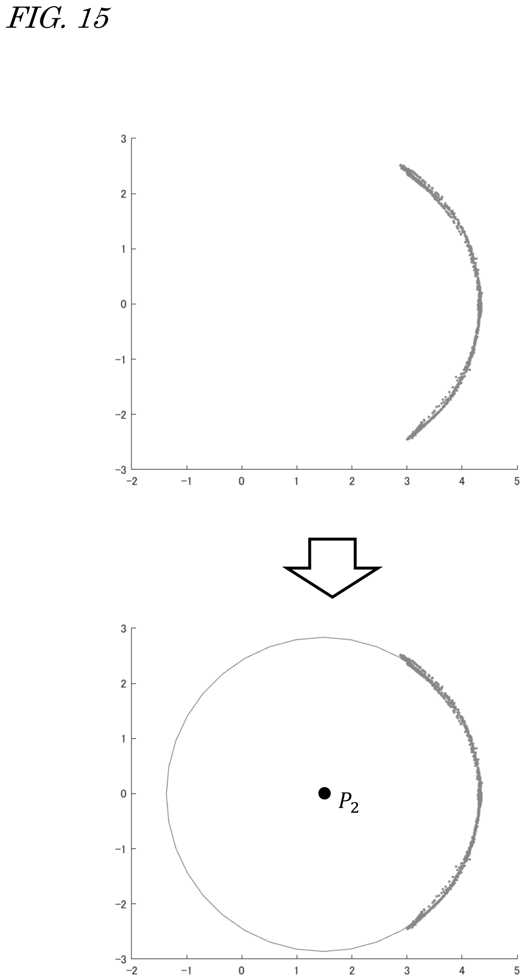

For example, the angle β is calculated based on a position relationship between the position of the characteristic point $P_G$ of the implement **300** and the position of a center of turning $P_c$ of the implement **300** with respect to the work vehicle **100.** The position of the center of turning $P_c$ of the implement **300** with respect to the work vehicle **100** may be determined by the position of a linking portion of the work vehicle **100,** by which the implement **300** is linked, for example. Because information of the size and position of the linking portion may be known to the user, the controller **180** may acquire information of the position of the center of turning $P_c$ of the implement **300** with respect to the work vehicle **100** based on an input from the user, for example. Alternatively, information of the size and position of the linking portion may be stored in a storage device that is external or internal to the work vehicle **100** as information that is associated with the model of the work vehicle **100.** Based on information that is acquired through communication with such a storage device, the controller **180** may acquire information of the position of the center of turning $P_c$ of the implement **300** with respect to the work vehicle **100.** In another example, as will be described later with reference to FIG. **14** and FIG. **15,** the position of the center of turning $P_c$ of the implement **300** with respect to the work vehicle **100** may be calculated based on a trajectory of the work vehicle **100** while traveling in a curve.

In the examples of FIGS. **8, 9A** and **9B,** by transforming coordinates ($x_G$,$y_G$) of the position of the characteristic point $P_G$ in the sensor coordinate system that is fixed to the LiDAR sensor(s) **140** into coordinates ($x'_G$,$y'_G$) in a coordinate system whose origin is at the center of turning **Pc,** the angle β can be calculated from the following equation.

[eq. 3]

$$\beta = \tan^{-1}\left(\frac{y'_G}{x'_G}\right)$$

In the illustrated example, the following equation can be used to perform the transform of coordinates ($x_G$,$y_G$) of the position of the characteristic point $P_G$ in the sensor coordinate system that is fixed to the LiDAR sensor(s) **140** into coordinates ($x'_G$,$y'_G$) in a coordinate system whose origin is at the center of turning **Pc:**

$$x'_G = x_G - x_c, \quad y'_G = y_G - y_c$$

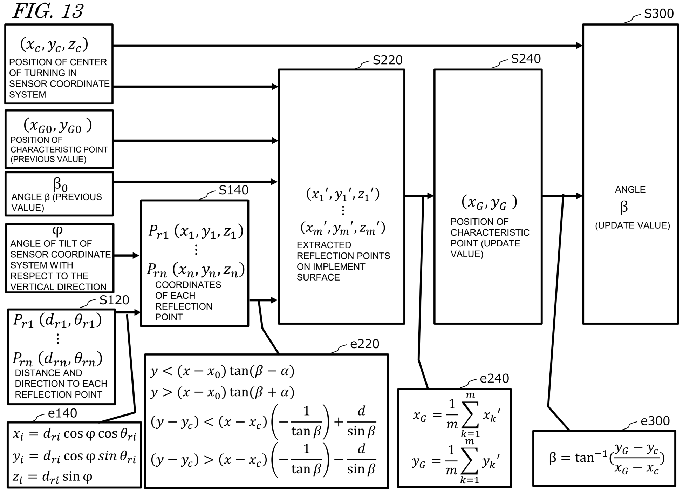

FIG. **13** is a block diagram showing an example procedure of calculating the angle β made by the orientation of the work vehicle **100** and the orientation of the implement **300** according to an example embodiment of the present invention. Here, the same reference numerals as steps **S120, S140, S220, S240** and **S300** appearing in the flowcharts of FIG. **6A** and FIG. **7** are used to indicate respective parameters obtained in the corresponding steps. Moreover, relational expressions that are used in calculating the parameters obtained in steps **S140, S220, S240** and **S300** are indicated as **e140, e220, e240** and **e300,** respectively. An arrow into each step indicates input values or referenced values. The filtering at step **S220** corresponds to the example which has been described with reference to FIG. **9B.** Note that the transform using the angle of tilt φ (see FIG. **3B**) of the sensor coordinate system with respect to the vertical direction in step **S140** may be omitted (i.e., it may be that φ =0).

Note that example embodiments of the present invention are not limited to the example of FIG. **13.** When consecutively calculating the angle β, it is not necessary to perform all of the processes of FIG. **13** in each instance; instead, values from a previous instance may be used to simplify the process. For example, the angle β calculation may be performed without carrying out the coordinate transform of step **S140.**

With reference to FIG. **14** and FIG. **15,** a method of calculating the position of the center of turning $P_c$ of the implement **300** with respect to the work vehicle **100** will be described. FIG. **14** and FIG. **15** are schematic diagrams for describing a method of calculating the position of the center of turning $P_c$ of the implement **300** with respect to the work vehicle **100.** In this example, the controller **180** acquires a trajectory of the characteristic point $P_G$ while the work vehicle **100** is traveling in a curve, and calculates the position of the center of rotation $P_2$ of the characteristic point $P_G$ based on the trajectory of the characteristic point $P_G$. In the angle β calculation, the controller **180** uses the calculated position of the center of rotation $P_2$ of the characteristic point $P_G$ as a center of turning of the implement **300** with respect to the work vehicle **100**. As used herein, "traveling in a curve" refers to a manner of travel that involves turning of the work vehicle **100**. For example, it may be traveling in an S shape, or traveling along a circular arc.

For example, as is indicated in an upper portion of FIG. **15,** a trajectory of the characteristic point $P_G$ when the work vehicle **100** travels in a curve is acquired. The trajectory of the characteristic point $P_G$ is acquired in a two-dimensional plane (e.g., the horizontal plane). As indicated in a lower portion of FIG. **15,** a circle representing the acquired trajectory of the characteristic point $P_G$ is determined through approximation (e.g., least squares approximation). The center $P2$ of the circle is defined as the center of turning of the implement **300** with respect to the work vehicle **100.** Determination of a circle using the least squares method well known to those skilled in the art, and detailed description thereof is omitted.

Even in a case of consecutively performing angle β calculations, the calculation of the position of the center of turning **Pc** does not need to be performed in each instance. For example, it may be performed upon linking the implement **300** to the work vehicle **100,** replacing the implement **300,** and so on.

Thus, by calculating the position of the center of rotation $P_2$ of the characteristic point $P_G$ based on the trajectory of the characteristic point $P_G$, it is possible to calculate the position of the center of turning of the implement **300** with respect to the work vehicle **100** with a high accuracy. When calculation is performed based only on information of vehicle specifications, it may be possible that the position of the center of turning of the implement **300** with respect to the work vehicle **100** does not have a sufficient calculation accuracy. For example, even if the model of the work vehicle and/or the implement is the same, error in the attached position of the linking portion or play of the rotation axis may occur, thus resulting in errors or fluctuations of the position of the center of turning of the implement **300** with respect to the work vehicle **100.** By using information of the trajectory of the characteristic point $P_G$ when the work vehicle **100** travels in a curve, the position of the center of turning of the implement **300** with respect to the work vehicle **100** can be calculated with a good accuracy.

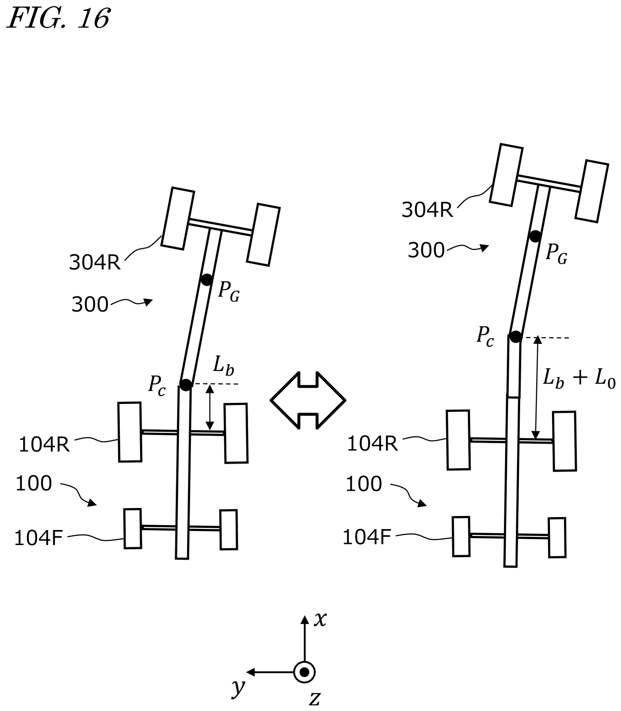

Furthermore, depending on the type of the implement **300,** the position of the center of turning **Pc** of the implement **300** with respect to the work vehicle **100** may be switched between when work is being performed by using the implement **300** and when work is not being performed by using the implement **300.** FIG. **16** schematically shows a work vehicle **100** configured so that the relative position of the center of turning $P_c$ of the implement **300** (with respect to the work vehicle **100)** with respect to the vehicle body of the work vehicle **100** is switchable. In the example of FIG. **16,** the distance of the position of the center of turning $P_c$ of the implement **300** with respect to the work vehicle **100** from the axle of the rear wheels **104R** of the work vehicle **100** may be switched between being relatively short (the distance being **Lb)** and being relatively long (the distance being **Lb+L0).** For example, in such a case, it is particularly effective to calculate the position of the characteristic point $P_G$ of center of rotation $P_2$ based on the trajectory of the characteristic point $P_G$.

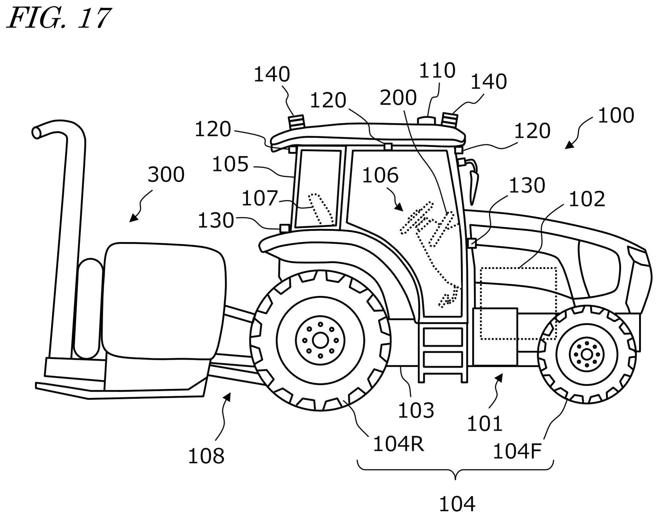

FIG. **17** is a side view schematically showing an example of the work vehicle **100.** FIG. **18** is a block diagram schematically showing an example configuration for the work vehicle **100** and the implement **300.** Although FIG. **17** illustrates an example where a direct-mounting type implement **300a** is linked to the work vehicle **100,** the following description is also applicable to the aforementioned work vehicle **100** and implement **300** so long as it makes technological sense to do so.

As shown in in FIG. **17** and FIG. **18,** the work vehicle **100** includes a positioning device **110** to output position data concerning the position of the work vehicle **100** (e.g., a GNSS unit), a sensor group **150** to detect the state of the work vehicle **100** and output sensor data, and a controller **180** configured or programmed to control the operation of the work vehicle **100.** The sensor group **150** includes one or more sensors.

The work vehicle **100** may further include a plurality of external sensors to sense the surroundings of the work vehicle **100.** An "external sensor" is a sensor that senses the external state of the work vehicle. In the example of FIG. **17,** the external sensors include a plurality of LiDAR sensors **140,** a plurality of cameras **120,** and a plurality of obstacle sensors **130.**

In addition to the positioning device **110,** the cameras **120,** the obstacle sensors **130,** the LiDAR sensors **140,** the sensor group **150,** a storage device **170,** the controller **180,** and an operation terminal **200,** the work vehicle **100** in the example of FIG. **18** also includes a communicator **190,** operation switches **210,** and a driver **240** (which may be referred to as a "first driver"). These component elements are communicably connected to one another via a bus.

As shown in FIG. **17,** the work vehicle **100** includes a vehicle body **101,** a prime mover (engine) **102,** and a transmission **103.** On the vehicle body **101,** travel device, which includes wheels **104** with tires, and a cabin **105** are provided. The travel device includes four wheels **104,** and axles to cause the four wheels to rotate, and braking device (brakes) to brake on each axle. The wheels **104** include a pair of front wheels **104F** and a pair of rear wheels **104R.** Inside the cabin **105,** a driver's seat **107,** a steering device **106,** an operation terminal **200,** and switches for manipulation are provided. The front wheels **104F** and/or the rear wheels **104R** may be replaced by a plurality of wheels with a track (crawlers), rather than wheels with tires, attached thereto.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller included in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point hitch" or a "three-point link"), a PTO (Power Take Off) shaft, a universal joint, and a communication cable. The linkage device **108** allows the implement **300** to be attached to, or detached from, the work vehicle **100.** The linkage device **108** is able to raise or lower the three-point hitch with a hydraulic device, for example, thus changing the position or attitude of the implement **300.** Moreover, motive power can be sent from the work vehicle **100** to the implement **300** via the universal joint. While towing the implement 300, the work vehicle **100** allows the implement **300** to perform a predetermined task. The linkage device may be provided at the front portion of the vehicle body **101.** In that case, the implement can be connected at the front portion of the work vehicle **100.**

Although the implement **300a** shown in FIG. **17** is a sprayer to spray a chemical agent onto a crop, the implement to be linked to the work vehicle **100** is not limited to a sprayer. For example, any arbitrary task device such as a mower, a seeder, a spreader, a rake, a baler, a harvester, a plow, a harrow, or a rotary tiller may be connected to the work vehicle **100** for use.

The positioning device **110** receives satellite signals (also referred to as GNSS signals) that are transmitted from a plurality of GNSS satellites, and performs positioning based on the satellite signals. GNSS is a collective term for satellite positioning systems such as the GPS (Global Positioning System), QZSS (Quasi-Zenith Satellite System, e.g., MICHIBIKI), GLONASS, Galileo, and BeiDou. Although the positioning device 110 in the present example embodiment is located above the cabin **105,** it may be located at any other position.

As shown in FIG. **18,** the positioning device **110** includes a GNSS receiver **111,** an RTK receiver **112,** and a processing circuit **116.** The positioning device **110** may further include an inertial measurement unit (IMU) **115.**

The GNSS receiver **111** includes an antenna to receive signals from the GNSS satellites, and a processing circuit to determine the position of the work vehicle 100 based on the signals received by the antenna. The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The positioning device **110** may perform positioning of the work vehicle **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be located near the work area where the work vehicle **100** performs tasked travel (e.g., at a position within 10 km of the work vehicle **100).** The reference station generates a correction signal of, for example, an RTCM format based on the satellite signals received from the plurality of GNSS satellites, and transmits the correction signal to the positioning device **110.** The RTK receiver **112,** which includes an antenna and a modem, receives the correction signal transmitted from the reference station. Based on the correction signal, the processing circuit **116** of the positioning device **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The positioning device **110** calculates the position of the work vehicle **100** as frequently as, for example, one to ten times per second. Note that the positioning method is not limited to being performed by using an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The positioning device **110** according to the present example embodiment may further include the IMU **115.** With the inclusion of the IMU **115,** the positioning device **110** can complement position data by utilizing signals from the IMU. The data acquired by the IMU **115** can be used to complement the position data based on the satellite signals, so as to improve the performance of positioning.

The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** For example, the IMU **115** outputs a signal as frequently as approximately several ten times to several thousand times per second. Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

The sensor group **150** may include various sensors to detect the state of the work vehicle **100** or the implement **300** (i.e., internal sensors). For example, the sensor group **150** may include a steering wheel sensor **152,** an angle-of-turn sensor **154,** and an axle sensor **156.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** may be used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.** Measurement values from the axle sensor **156** can be utilized for the speed control by the controller **180.**

The storage device **170** includes one or more storage media such as a flash memory or a magnetic disc. The storage device **170** stores various data that is generated by the positioning device **110,** the cameras **120,** the obstacle sensors **130,** the LiDAR sensors **140,** the sensor group 150, and the controller **180.** The data that is stored by the storage device **170** may include an environment map of the environment where the work vehicle **100** travels, an obstacle map that is consecutively generated during travel, and path data for self-driving. The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, and the ECU **184** for self-driving control.

The ECU **181** is configured or programmed to control the prime mover **102,** the transmission **103,** and brakes included in the driver **240,** thus controlling the speed of the work vehicle **100.**

The ECU **182** is configured or programmed to control the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** is configured or programmed to control the operations of the three-point hitch, the PTO shaft, and the like that are included in the linkage device **108.** Also, the ECU **183** generates a signal to control the operation of the implement **300,** and transmits this signal from the communicator **190** to the implement **300.**

Based on data output from the positioning device **110,** the cameras **120,** the obstacle sensors **130,** the LiDAR sensors **140,** and the sensor group **150,** the ECU **184** performs computation and control for achieving self-driving. For example, the ECU **184** estimates the position of the work vehicle **100** based on the data output from at least one of the positioning device **110,** the cameras **120,** and the LiDAR sensors **140.** In a situation where a sufficiently high reception intensity exists for the satellite signals from the GNSS satellites, the ECU **184** may determine the position of the work vehicle **100** based only on the data output from the positioning device **110.** On the other hand, in an environment where obstructions, such as trees, that may hinder reception of the satellite signals exist around the work vehicle **100,** e.g., an orchard, the ECU **184** estimates the position of the work vehicle **100** by using the data output from the LiDAR sensors **140** or the cameras **120.** During self-driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** is configured or programmed to control the prime mover **102,** the transmission **103,** or the brakes to change the speed of the work vehicle **100.** In response to the command to change the steering angle, the ECU **182** is configured or programmed to control the steering device **106** to change the steering angle.

Through the actions of these ECUs, the controller **180** is configured or programmed to realize self-traveling.

During self-traveling, the controller **180** is configured or programmed to control the driver **240** based on the measured or estimated position of the work vehicle **100** and on the consecutively-generated target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network). Instead of a CAN, faster communication methods such as Automotive Ethernet (registered trademark) may be used. Although the ECUs **181** to **184** are illustrated as individual blocks in FIG. **18,** the function of each of the ECU **181** to **184** may be implemented by a plurality of ECUs. Alternatively, an onboard computer that integrates the functions of at least some of the ECUs **181** to **184** may be provided. The controller **180** may include ECUs other than the ECUs **181** to **184,** and any number of ECUs may be provided in accordance with functionality. Each ECU includes a processing circuit including one or more processors.

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device, which is responsible for remote monitoring, for example. The images may be used to monitor the work vehicle **100** during unmanned driving. The cameras **120** may be provided according to the needs, and any number of them may be provided.

The LiDAR sensors **140** are one example of external sensors that output sensor data indicating a distribution of geographic features around the work vehicle **100**. In the example of FIG. **17,** two LiDAR sensors **140** are located on the cabin **105,** at the front and the rear. The LiDAR sensors **140** may be provided at other positions (e.g., on a lower portion of a front face of the vehicle body **101**). While the work vehicle **100** is traveling, each LiDAR sensor **140** repeatedly outputs sensor data representing the distances and directions of measurement points on objects existing in the surrounding environment, or two-dimensional or three-dimensional coordinate values of such measurement points. The number of LiDAR sensors **140** is not limited to two, but may be one, or three or more.

The LiDAR sensors **140** may be configured to output two-dimensional or three-dimensional point cloud data as sensor data. In the present specification, "point cloud data" broadly means data indicating a distribution of multiple reflection points that are observed with the LiDAR sensors **140**. The point cloud data may include coordinate values of each reflection point in a two-dimensional space or a three-dimensional space or information indicating the distance and direction of each reflection point, for example. The point cloud data may include information of luminance of each reflection point. The LiDAR sensors **140** may be configured to repeatedly output point cloud data with a pre-designated cycle, for example. Thus, the external sensors may include one or more LiDAR sensors **140** that output point cloud data as sensor data.

The sensor data that is output from the LiDAR sensors **140** is processed by a controller that controls self-traveling of the work vehicle **100**. During travel of the work vehicle **100,** based on the sensor data that is output from the LiDAR sensors **140,** the controller can consecutively generate an obstacle map indicating a distribution of objects existing around the work vehicle **100**. The controller may be configured or programmed to generate an environment map by joining together obstacle maps with the use of an algorithm such as SLAM, for example, during self-traveling. The controller can be configured or programmed to perform estimation of the position and orientation of the work vehicle **100** (i.e., localization) by matching the sensor data against the environment map.

The plurality of obstacle sensors **130** shown in FIG. **17** are provided at the front and the rear of the cabin **105**. The obstacle sensors **130** may be located at other positions. For example, one or more obstacle sensors **130** may be located at any position at the sides, the front, or the rear of the vehicle body **101**. The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles.

The controller of the work vehicle **100** may be configured or programmed to utilize, for positioning, the sensor data acquired with the sensing devices such as the cameras **120** or the LIDAR sensors **140,** in addition to the results of positioning provided by the positioning device **110**. In the case where geographic features serving as characteristic points exist in the environment that is traveled by the work vehicle **100,** as in the case of an agricultural road, a forest road, a general road, or an orchard, the position and the orientation of the work vehicle **100** can be estimated with a high accuracy based on data that is acquired with the cameras **120** or the LiDAR sensors **140** and on an environment map that is previously stored in the storage device. By correcting or complementing position data based on the satellite signals using the data acquired with the cameras **120** or the LiDAR sensors **140,** it becomes possible to identify the position of the work vehicle **100** with a higher accuracy.

The work vehicle **100** and the implement **300** can communicate with each other via a communication cable that is included in the linkage device **108**. The work vehicle **100** is able to communicate with a terminal device **400** for remote monitoring via a network **80**. The terminal device **400** may be any arbitrary computer, e.g., a personal computer (PC), a laptop computer, a tablet computer, or a smartphone, for example.

The implement **300** includes a driver **340** (which may be referred to as the "second driver"), a driver **340,** a controller **380,** and a communicator **390**. Note that FIG. **18** shows component elements which are relatively closely related to the operations of self-driving by the work vehicle **100,** while other components are omitted from illustration.

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **17,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as a camera(s) for generating images for monitoring purposes. The infrared camera(s) may also be used for detection of obstacles at nighttime.

An obstacle sensor **130** detects objects around the work vehicle **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be located at different positions of the work vehicle **100.** Providing a multitude of obstacle sensors **130** can reduce blind spots in monitoring obstacles around the work vehicle **100.**

The driver **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The driver **240** may include an electric motor for traction instead of, or in addition to, the internal combustion engine.

The communicator **190** is a device including a circuit to communicate with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the terminal device **400.** The network **80** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operation terminal **200** is a terminal for the user to perform a manipulation related to the travel of the work vehicle **100** and the operation of the implement **300,** and is also referred to as a virtual terminal (VT). The operation terminal **200** may include a display device such as a touch screen panel, and/or one or more buttons. The display device may be a display such as a liquid crystal display or an organic light-emitting diode (OLED) display, for example. By manipulating the operation terminal **200,** the user can perform various manipulations, such as, for example, switching ON/OFF the self-driving mode, switching ON/OFF a recording (teaching) mode and a reproducing (playback) mode, and switching ON/OFF the implement **300.** At least some of these manipulations may also be realized by manipulating the operation switches **210.** The operation terminal **200** may be configured so as to be detachable from the work vehicle **100.** A user who is at a remote place from the work vehicle **100** may manipulate the detached operation terminal **200** to control the operation of the work vehicle **100.** The operation terminal **200** may include a storage device. In place of the storage device **170,** the storage device in the operation terminal **200** may store various data that is necessary for the operation of the work vehicle **100.**

The driver **340** in the implement **300** shown in FIG. **18** performs necessary operations for the implement **300** to perform predetermined tasks. The driver **340** includes a device that is adapted to the use of the implement **300,** e.g., a hydraulic device, an electric motor, or a pump. The controller **380** is configured or programmed to control the operation of the driver **340.** In response to signals that are transmitted from the work vehicle **100** via the communicator **390,** the controller **380** is configured or programmed to cause the driver **340** to perform various operations. Moreover, a signal that is in accordance with the state of the implement **300** may be transmitted from the communicator **390** to the work vehicle **100.**

Path generation methods according to example embodiments of the present invention is broadly applicable to various kinds of work vehicles for use in smart agriculture. With path generation methods and travel control systems according to example embodiments of the present invention, it is possible to achieve a more efficient travel of a work vehicle having an implement linked thereto within a field.

While example embodiments of the present invention have been described above, it is to be understood that variations and modifications will be apparent to those skilled in the art without departing from the scope and spirit of the present invention. The scope of the present invention, therefore, is to be determined solely by the following claims.

**Claims**

1.  A travel control system to control travel of a work vehicle having an implement linked thereto, the travel control system comprising:

    one or more LiDAR sensors attached to the work vehicle to output point cloud data representing a surrounding environment of the work vehicle including at least a portion of the implement; and
    a controller configured or programmed to control travel of the work vehicle; wherein
    the implement is linked to the work vehicle in a manner that permits turning relative to the work vehicle; and
    the controller is configured or programmed to:

    determine a position of a characteristic point of the implement based on the point cloud data acquired from the LiDAR sensor; and
    calculate an angle between an orientation of the work vehicle and an orientation of the implement based on the position of the characteristic point.

2.  The travel control system of claim 1, wherein the controller is configured or programmed to calculate the angle between the orientation of the work vehicle and the orientation of the implement based on a position relationship between the position of the characteristic point and a position of a center of turning of the implement with respect to the work vehicle.

3.  The travel control system of claim 1 or 2, wherein the controller is configured or programmed to:

    extract point cloud data representing reflection points on a surface of the implement by filtering the point cloud data acquired by the LiDAR sensor; and
    calculate the position of the characteristic point based on the extracted point cloud data.

4.  The travel control system of claim 3, wherein the controller is configured or programmed to calculate the position of the characteristic point by determining an arithmetic mean or a weighted mean of the extracted point cloud data.

5.  The travel control system of claim 3, wherein the controller is configured or programmed to determine the position of the characteristic point by detecting a characteristic shape of the implement or a member that is attached to the implement based on the extracted point cloud data.

6.  The travel control system of any of claims 3 to 5, wherein the controller is configured or programmed to perform the filtering of the point cloud data by down sampling the point cloud data acquired by the LiDAR sensor.

7.  The travel control system of any of claims 3 to 6, wherein the controller is configured or programmed to:

    consecutively calculate the angle while the work vehicle is traveling; and
    perform the filtering of the point cloud data by extracting any instance of the point cloud data that falls in a predetermined angle range from a previously-calculated value of the angle.

8.  The travel control system of any of claims 3 to 7, wherein the controller is configured or programmed to:

    consecutively calculate the angle while the work vehicle is traveling; and
    perform the filtering of the point cloud data by extracting any instance of the point cloud data that falls in a predetermined distance range from a previously-calculated position of the characteristic point.

9.  The travel control system of any of claims 1 to 8, wherein the controller is configured or programmed to:

    acquire a trajectory of the characteristic point while the work vehicle is traveling in a curve;
    calculate a position of a center of rotation of the characteristic point based on the trajectory of the characteristic point; and
    calculate the angle based on the position of the center of rotation of the characteristic point.

10. The travel control system of any of claims 1 to 9, wherein the controller is configured or programmed to, based on information of a distance and a direction of a reflection point from the LiDAR sensor as indicated by the point cloud data acquired by the LiDAR sensor, acquire information of a position of each reflection point.

11. The travel control system of any of claims 1 to 10, wherein the point cloud data is two-dimensional point cloud data including two-dimensional position information.

12. The travel control system of any of claims 1 to 11, wherein the controller is configured or programmed to generate a travel path of the work vehicle based on the calculated angle.

13. The travel control system of any of claims 1 to 12, wherein a marker that is located in a range of sensing by the LiDAR sensor is attached to the implement.

14. The travel control system of any of claims 1 to 13, wherein the controller is configured or programmed to cause the calculated angle to be displayed by a display device of the work vehicle.

15. A work vehicle comprising:

the travel control system of any of claims 1 to 14;
a travel device including a wheel responsible for steering; and
a driver to drive the travel device; wherein
the controller is configured or programmed to perform steering control for the wheel responsible for steering by controlling the driver based on the calculated angle.

16. The work vehicle of claim 15, wherein:

the work vehicle includes a linking portion by which the implement is connected;
the implement is linked to the work vehicle so as to be capable of turning around the linking portion; and
a relative position of the linking portion with respect to a vehicle body of the work vehicle is switchable between when work is being performed by using the implement and when work is not being performed by using the implement.

*FIG. 1A*

*FIG. 1B*

FIG. 1C

FIG. 1D

*FIG. 2*

```
                    ┌─────────────┐
                    │    START    │
                    └─────────────┘
                           │
                           ▼
   ┌───────────────────────────────────────────────┐  S100
   │   ACQUIRE POINT CLOUD DATA BEING OUTPUT FROM   │
   │   LiDAR SENSOR(S) AND REPRESENTING             │
   │   SURROUNDING ENVIRONMENT OF WORK VEHICLE,     │
   │   WHICH INCLUDES AT LEAST A PORTION OF         │
   │   IMPLEMENT                                    │
   └───────────────────────────────────────────────┘
                           │
                           ▼
   ┌───────────────────────────────────────────────┐  S200
   │         BASED ON ACQUIRED POINT CLOUD DATA,    │
   │   DETERMINE POSITION OF CHARACTERISTIC POINT   │
   │                 OF IMPLEMENT                   │
   └───────────────────────────────────────────────┘
                           │
                           ▼
   ┌───────────────────────────────────────────────┐  S300
   │         BASED ON DETERMINED POSITION OF        │
   │  CHARACTERISTIC POINT, CALCULATE ANGLE MADE BY │
   │    WORK VEHICLE ORIENTATION AND IMPLEMENT      │
   │                 ORIENTATION                    │
   └───────────────────────────────────────────────┘
                           │
                           ▼
                    ┌─────────────┐
                    │     END     │
                    └─────────────┘
```

## FIG. 3A

$P_G(x_G, y_G)$

Rsa

304R

300

$\beta$

$P_C(x_C, y_C)$

104R

SENSOR COORDINATE SYSTEM

$x$

$y$

100

140

104F

## FIG. 3B

VEHICLE COORDINATE SYSTEM

SENSOR COORDINATE SYSTEM

$z$

$z$

$x$

$\varphi$

$x$

*FIG. 4A*

*FIG. 4B*

FIG. 5

100

600

500

800

700

600

## FIG. 6A

```
                    ┌─────────────┐
                    │    START    │
                    └─────────────┘
                           │
┌ ─ ─ ─ ─ ─ ─ ─ ─ ─ ─ ─ ─ ─│─ ─ ─ ─ ─ ─ ─ ─ ─ ─ ┐   S100
│                          ▼                      │
│  ┌────────────────────────────────────────┐    │  S120
│  │ ACQUIRE POINT CLOUD DATA BEING OUTPUT   │    │
│  │ FROM LiDAR SENSOR(S) AND REPRESENTING   │    │
│  │ SURROUNDING ENVIRONMENT OF WORK         │    │
│  │ VEHICLE, WHICH INCLUDES AT LEAST A      │    │
│  │ PORTION OF IMPLEMENT                    │    │
│  └────────────────────────────────────────┘    │
│                          │                      │
│                          ▼                      │
│  ┌────────────────────────────────────────┐    │  S140
│  │ BASED ON INFORMATION OF DISTANCE AND    │    │
│  │ DIRECTION OF EACH REFLECTION POINT FROM │    │
│  │ LiDAR SENSOR(S), AS INDICATED BY POINT  │    │
│  │ CLOUD DATA ACQUIRED FROM LiDAR          │    │
│  │ SENSOR(S), ACQUIRE INFORMATION OF       │    │
│  │ POSITION OF EACH REFLECTION POINT       │    │
│  └────────────────────────────────────────┘    │
│                          │                      │
│                          ▼                      │
│  ┌────────────────────────────────────────┐    │  S160
│  │ BASED ON IMU DATA OUTPUT FROM IMU,      │    │
│  │ PERFORM CORRECTION IN ACCORDANCE WITH   │    │
│  │ ANGLE OF TILT OF SENSOR COORDINATE      │    │
│  │ SYSTEM THAT IS FIXED TO LiDAR SENSOR(S) │    │
│  └────────────────────────────────────────┘    │
└ ─ ─ ─ ─ ─ ─ ─ ─ ─ ─ ─ ─ ─│─ ─ ─ ─ ─ ─ ─ ─ ─ ─ ┘
                           ▼
   ┌────────────────────────────────────────┐       S200
   │ BASED ON ACQUIRED POINT CLOUD DATA,     │
   │ DETERMINE POSITION OF CHARACTERISTIC    │
   │ POINT OF IMPLEMENT                      │
   └────────────────────────────────────────┘
                           │
                           ▼
   ┌────────────────────────────────────────┐       S300
   │ BASED ON DETERMINED POSITION OF         │
   │ CHARACTERISTIC POINT, CALCULATE ANGLE   │
   │ MADE BY WORK VEHICLE ORIENTATION AND    │
   │ IMPLEMENT ORIENTATION                   │
   └────────────────────────────────────────┘
                           │
                           ▼
                    ┌─────────────┐
                    │     END     │
                    └─────────────┘
```

## FIG. 6B

$$P_{r1}(d_{r1},\theta_{r1}) \quad\longrightarrow\quad P_{r1}(x_1,y_1)$$
$$\vdots \qquad\qquad\qquad \vdots$$
$$P_{rn}(d_{rn},\theta_{rn}) \qquad\qquad P_{rn}(x_n,y_n)$$

*FIG. 7*

START

ACQUIRE POINT CLOUD DATA BEING OUTPUT FROM LiDAR SENSOR(S) AND REPRESENTING SURROUNDING ENVIRONMENT OF WORK VEHICLE, WHICH INCLUDES AT LEAST A PORTION OF IMPLEMENT — S100

S200

BY FILTERING POINT CLOUD DATA, EXTRACT DATA REPRESENTING REFLECTION POINTS ON IMPLEMENT SURFACE — S220

BY DETERMINING ARITHMETIC MEAN OF EXTRACTED POINT CLOUD DATA, CALCULATE POSITION OF CHARACTERISTIC POINT — S240

BASED ON DETERMINED POSITION OF CHARACTERISTIC POINT, CALCULATE ANGLE MADE BY WORK VEHICLE ORIENTATION AND IMPLEMENT ORIENTATION — S300

END

FIG. 8

FIG. 9A

$y = (x - c)\tan(\beta_0 - \alpha)$
$\cdots(2)$

$y = (x - c)\tan(\beta_0 + \alpha)$
$\cdots(1)$

$-\alpha$

$+\alpha$

$D_2 = 2L_2 \tan\alpha$

$L_2$

304R

300

$\beta_0$

$P_C(x_C, y_C) = (c, 0)$

$y$

104R

$x$

100

## FIG. 9B

$$y = (x - c)\, tan(\beta_0 - \alpha) \quad \cdots(2)$$

$$y = (x - c)\, tan\,\beta_0 \quad \cdots(4)$$

$$y = (x - c)\, tan(\beta_0 + \alpha) \quad \cdots(1)$$

$$(y - y_{G0}) = (x - x_{G0})\left(-\frac{1}{\tan \beta_0}\right) + \frac{d1}{\sin \beta_0} \quad \cdots(3)$$

$$P_{G0}(x_{G0}, y_{G0})$$

$$(y - y_{G0}) = (x - x_{G0})\left(-\frac{1}{\tan \beta}\right) \quad \cdots(5)$$

$$P_C(x_C, y_C) = (c, 0)$$

304R

300

104R

100

$\beta_0$

$d1$

*FIG. 10*

POSITION

CENTER
LINE

POSITION

*FIG. 11A*

321a1

322a

321a2

321c1

300

321c2

*FIG. 11B*

$x$

$y$

⟹

$x$

$P_{G1}$

$P_{G2}$

$P_G$

$y$

*FIG. 11C*

$x$

$P_G(\beta=0)$

$P_G$

$\beta$

$y$

*FIG. 12A*

*FIG. 12B*

*FIG. 12C*

## FIG. 13

$(x_c, y_c, z_c)$
POSITION OF CENTER
OF TURNING IN
SENSOR COORDINATE
SYSTEM

$(x_{G0}, y_{G0})$
POSITION OF
CHARACTERISTIC POINT
(PREVIOUS VALUE)

$\beta_0$
ANGLE β (PREVIOUS
VALUE)

$\varphi$
ANGLE OF TILT OF
SENSOR COORDINATE
SYSTEM WITH
RESPECT TO THE
VERTICAL DIRECTION

S140

$P_{r1}(x_1, y_1, z_1)$
$\vdots$
$P_{rn}(x_n, y_n, z_n)$
COORDINATES
OF EACH
REFLECTION
POINT

S120

$P_{r1}(d_{r1}, \theta_{r1})$
$\vdots$
$P_{rn}(d_{rn}, \theta_{rn})$
DISTANCE AND
DIRECTION TO EACH
REFLECTION POINT

S220

$(x_1', y_1', z_1')$
$\vdots$
$(x_m', y_m', z_m')$
EXTRACTED
REFLECTION POINTS
ON IMPLEMENT
SURFACE

S240

$(x_G, y_G)$
POSITION OF
CHARACTERISTIC
POINT (UPDATE
VALUE)

S300

ANGLE
$\beta$
(UPDATE VALUE)

e140

$x_i = d_{ri} \cos\varphi \cos\theta_{ri}$
$y_i = d_{ri} \cos\varphi \sin\theta_{ri}$
$z_i = d_{ri} \sin\varphi$

e220

$y < (x - x_0)\tan(\beta - \alpha)$
$y > (x - x_0)\tan(\beta + \alpha)$
$(y - y_c) < (x - x_c)\left(-\dfrac{1}{\tan\beta}\right) + \dfrac{d}{\sin\beta}$
$(y - y_c) > (x - x_c)\left(-\dfrac{1}{\tan\beta}\right) - \dfrac{d}{\sin\beta}$

e240

$x_G = \dfrac{1}{m}\displaystyle\sum_{k=1}^{m} x_k'$
$y_G = \dfrac{1}{m}\displaystyle\sum_{k=1}^{m} y_k'$

e300

$\beta = \tan^{-1}\left(\dfrac{y_G - y_c}{x_G - x_c}\right)$

*FIG. 14*

304R

300

$P_G$

$P_2$

104R

100

104F

x

y

z

*FIG. 15*

*FIG. 16*

FIG. 17

## FIG. 18

Europäisches
Patentamt

European
Patent Office

Office européen
des brevets

# EUROPEAN SEARCH REPORT

**Application Number**

EP 25 22 6642

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 042957 A1 (DAIMLER CHRYSLER AG [DE]) 22 March 2007 (2007-03-22) * paragraphs [0020], [0024], [0026], [0027], [0032], [0045], [0046], [0049] * | 1-16 | INV. G05D1/242 A01B69/00 B62D15/02 G01S17/931 |
| | ----- | | |
| X | US 2020/143174 A1 (LUO YI [US] ET AL) 7 May 2020 (2020-05-07) * paragraphs [0041], [0042], [0045], [0046], [0049], [0051], [0053] * | 1,15 | |
| | ----- | | |
| A | DE 10 2018 204981 A1 (BOSCH GMBH ROBERT [DE]) 10 October 2019 (2019-10-10) * paragraph [0039]; figure 1 * | 5 | |
| | ----- | | |

**TECHNICAL FIELDS
SEARCHED (IPC)**

G05D
A01B
G01S
B62D

The present search report has been drawn up for all claims

| Place of search | Date of completion of the search | Examiner |
|---|---|---|
| Munich | 10 March 2026 | Nicolaucig, Aldo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 6642

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2026

| Patent document cited in search report | Publication date | Patent family member(s) | | Publication date |
|---|---|---|---|---|
| DE 102005042957 A1 | 22-03-2007 | NONE | | |
| US 2020143174 A1 | 07-05-2020 | CN | 113039580 A | 25-06-2021 |
| | | CN | 117593370 A | 23-02-2024 |
| | | US | 2020143174 A1 | 07-05-2020 |
| | | US | 2022092318 A1 | 24-03-2022 |
| | | US | 2023410537 A1 | 21-12-2023 |
| | | WO | 2020096769 A1 | 14-05-2020 |
| DE 102018204981 A1 | 10-10-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024231291 A

- US 2022107586 A